# EUROPEAN PATENT APPLICATION

(11) **EP 4 398 613 A1**
(43) Date of publication of application: **10.07.2024**
(21) Application number: 22886015.1
(22) Date of filing: 26.10.2022
(51) Int. Cl.: H04W 4/80

(54) **AUDIO PLAYING METHOD, AND ELECTRONIC DEVICE AND SYSTEM**

(30) Priority: 28.10.2021 CN 202111267075
(71) Applicant: Huawei Technologies Co., Ltd., Shenzhen, Guangdong 518129 (CN)
(72) Inventor: CHEN, Hang, Shenzhen, Guangdong 518129 (CN); ZHAO, Wei, Shenzhen, Guangdong 518129 (CN); FENG, Xiaobing, Shenzhen, Guangdong 518129 (CN); ZENG, Wang, Shenzhen, Guangdong 518129 (CN); LI, Mingyu, Shenzhen, Guangdong 518129 (CN); WEN, Chen, Shenzhen, Guangdong 518129 (CN); LIU, Jie, Shenzhen, Guangdong 518129 (CN); XIA, Can, Shenzhen, Guangdong 518129 (CN)
(74) Representative: Pfenning, Meinig & Partner mbB
(86) International application number: PCT/CN2022/127647
(87) International publication number: WO 2023/072139

(57) **Abstract**

Embodiments of this application provide an audio playing method, an electronic device, and a system. The method is applied to a first device, and includes: obtaining first data when a first trigger condition is met, where the first trigger condition includes: a first instruction for playing an audio is received, or a connection to a device configured to play an audio is disconnected, and the first data is data obtained by at least one assisting device capable of communicating with the first device; and determining, based on the first data, that an audio playing manner of the first device is a first manner in a plurality of manners, where the plurality of manners include at least one of the following: playing the audio by using a loudspeaker of the first device, playing the audio by using a second device, and stopping playing the audio. The first device can intelligently adjust the playing manner based on the data obtained by the assisting device capable of communicating with the first device. Therefore, the playing manner meets a playing requirement of a user in a current scenario, and poor user experience caused by an inappropriate playing manner is avoided.

## Description

This application claims priority to Chinese Patent Application No. 202111267075.2, filed with the China National Intellectual Property Administration on October 28, 2021 and entitled "AUDIO PLAYING METHOD, ELECTRONIC DEVICE, AND SYSTEM", which is incorporated herein by reference in its entirety.

### TECHNICAL FIELD

This application relates to the field of computer technologies, and in particular, to an audio playing method, an electronic device, and a system.

### BACKGROUND

Currently, there are various audio playing manners. For example, when a user uses a computer as an audio source to play an audio, the user may directly play the audio by using a loudspeaker of the computer (which is referred to as a loudspeaker manner for short), or may play the audio by using a device, for example, a headset or a speaker that is directly or indirectly connected to the computer. However, an audio playing manner of an electronic device is still not intelligent enough. For example, in a multi-screen collaboration state, a mobile phone is connected to the computer, and the mobile phone is connected to a headset. When the computer is used as the sound source, the audio may be played by using the headset. However, if a connection between the mobile phone and the computer is disconnected (for example, the user carries the mobile phone out of a communication range of the computer, or the connection between the mobile phone and the computer is unstable), the computer may play the audio in the loudspeaker manner by mistake unless the user manually connects the headset to the computer or disables a function of playing an audio by the computer. This leads to complex user operations, poor experience, and low product usability.

### SUMMARY

Embodiments of this application disclose an audio playing method, an electronic device, and a system, so that a sound source device can determine an audio playing manner based on data obtained by an assisting device capable of communicating with the sound source device. In this way, the determined audio playing manner meets a playing requirement of a user in a current scenario, and is more intelligent, and poor user experience caused by an inappropriate audio playing manner is avoided.

According to a first aspect, an embodiment of this application provides an audio playing method, applied to a first device. The first device is configured to provide an audio for playing. The method includes: obtaining first data when a first trigger condition is met, where the first trigger condition includes: a first instruction for playing the audio is received, or a connection to a device configured to play the audio is disconnected, and the first data includes data obtained by at least one assisting device capable of communicating with the first device; and determining, based on the first data, that an audio playing manner of the first device is a first manner in a plurality of manners, where the plurality of manners include the following: playing the audio by using a loudspeaker of the first device, playing the audio by using a second device, and stopping playing the audio.

In this application, the first device may determine the audio playing manner based on the first data. The first data includes data obtained by the at least one assisting device capable of communicating with the first device, and the data is from a variety of sources. The playing manner determined based on the first data can be well applicable to a current playing scenario, and meets a playing requirement of a user in the current scenario. This avoids poor user experience caused by an inappropriate playing manner, the user does not need to perform a complex manual operation to adjust the audio playing manner, the audio playing manner is more intelligent, and product usability is high.

In a possible implementation, the second device is a device in the at least one assisting device, or the second device is a device connected to the at least one assisting device.

In some embodiments, the plurality of manners further include playing the audio by using a device other than the second device. Optionally, the device other than the second device is a device in the at least one assisting device, or the device other than the second device is a device connected to the at least one assisting device.

In this application, a device configured to play the audio provided by the first device may be an assisting device that provides the first data, or may be a device connected to the assisting device. Application scenarios are extensive, and product usability is improved.

In a possible implementation, the first data includes at least one of the following: a type of the assisting device, a status of the assisting device, a type of the device connected to the assisting device, and a status of the device connected to the assisting device.

In some embodiments, the type of the assisting device or the type of the device connected to the assisting device includes a type distinguished by using hardware, for example, one type is a tablet computer, and another type is a smartphone. In some embodiments, the type of the assisting device or the type of the device connected to the assisting device includes a type distinguished by using software. For example, a type is a sound playing device, and the sound playing device is configured to play an audio provided by a sound source device.

In some embodiments, the status of the assisting device or the status of the device connected to the assisting device includes whether the assisting device is in a connectable state. In some embodiments, the status of the assisting device or the status of the device connected to the assisting device includes whether to play the audio as a sound playing device, where the sound playing device is configured to play the audio provided by a sound source device.

In this application, the first data may include information about the assisting device and/or information about the device connected to the assisting device. The first device may obtain, by using the first data, a status of a surrounding device. The determined audio playing manner better meets the playing requirement of the user in the current playing scenario, a success rate of performing the determined audio playing manner is high, and the audio playing manner is more intelligent.

In a possible implementation, the first data includes a status of the user, and the status of the user includes whether the user is in a sleep state or a motion state.

In some embodiments, the status of the user is data obtained by the assisting device whose type belongs to a wearable device.

In some embodiments, a user corresponding to the status of the user includes a user using the first device. In some embodiments, a user corresponding to the status of the user includes another user other than a user using the first device.

In a possible implementation, the second device is a wireless headset, and the first data includes: When the user is in the sleep state or the motion state, the first manner is playing the audio by using the second device.

In this application, the first data may include the status of the user. The first device may obtain a status of a current user (the user using the first device) and/or a surrounding user by using the first data. The determined audio playing manner better meets the playing requirement of the user in the current playing scenario, and avoids a case in which an inappropriate audio playing manner affects the user in a specific state. The audio playing manner is more intelligent.

In a possible implementation, the first data includes current time and/or a location of the first device.

In some embodiments, the current time and the location of the first device are detected by the first device, instead of being obtained by the assisting device. This reduces unnecessary data transmission and reduces power consumption.

In a possible implementation, when the second device is a smart speaker, the current time belongs to a preset leisure period, and the location of the first device belongs to preset family space, the first manner is playing the audio by using the second device. Alternatively, when the second device is a wireless headset, the current time belongs to a preset rest period, and the location of the first device belongs to preset family space, the first manner is playing the audio by using the second device. Alternatively, when the second device is a wireless headset, and the location of the first device belongs to preset outdoor space, the first manner is playing the audio by using the second device.

In this application, the first data may include the current time and the location of the first device. The first device may predict the current playing scenario based on the first data. The determined audio playing manner better meets the playing requirement of the user in the current playing scenario, and the audio playing manner is more intelligent.

In a possible implementation, the first trigger condition includes: The first instruction is received. When the first trigger condition is met, the first device is not connected to the second device, and a device most recently connected to the second device is a device other than the first device. The first data includes a status of the second device, the status of the second device is a connectable state, and the first manner is playing the audio by using the second device. After the determining that an audio playing manner of the first device is a first manner in a plurality of manners, the method further includes: establishing a connection to the second device, and playing the audio by using the second device.

In this application, when the first device determines, based on the first data, to play the audio by using the second device, the first device may establish the connection to the second device even if a device that is most recently connected to the second device is not the first device, to play the audio by using the second device. In this way, the audio playing manner that better meets the user requirement is used, and user experience is ensured.

In a possible implementation, the first trigger condition includes: The connection to the device configured to play the audio is disconnected. The first data includes a type of the second device and a status of the second device, the type of the second device is the same as a type of the device configured to play the audio, the status of the second device is a connectable state, and the first manner is playing the audio by using the second device. After the determining that an audio playing manner of the first device is a first manner in a plurality of manners, the method further includes: establishing a connection to the second device, and playing the audio by using the second device.

In this application, when the first trigger condition is that a connection to the device configured to play the audio is disconnected, when determining the audio playing manner based on the first data, the first device may preferably select the second device that is of a same type as the foregoing device configured to play the audio, to play the audio. This reduces a "disconnection sense", and better meets a user requirement, and the audio playing manner is more intelligent.

In a possible implementation, the obtaining first data includes: sending a request message to a third device, and receiving second data sent by the third device based on the request message. The first data includes the second data, and the third device is a device in the at least one assisting device, or the third device is a device that receives the second data sent by the assisting device.

In this application, the first device may directly obtain the first data from the assisting device, or may obtain the first data from another device. A specific obtaining manner may be selected based on an actual scenario. Application scenarios are extensive, and product usability is high.

In a possible implementation, the request message includes information indicating a data type of the second data; or before the obtaining first data, the method further includes: The first device and the third device determine the type of the second data through negotiation.

In this application, when obtaining the first data, the first device may indicate a required data type in the request message, or may negotiate a required data type in advance. A specific obtaining manner may be selected based on an actual scenario. Application scenarios are extensive, and product usability is high.

In a possible implementation, the obtaining first data includes: receiving third data sent by a fourth device in the at least one assisting device, and receiving fourth data sent by a fifth device in the at least one assisting device. The first data includes the third data and the fourth data, a type of the fourth device and a type of the fifth device are different, and a type of the third data and a type of the fourth data are different.

In this application, different types of assisting devices may provide different types of data, and the data is from a variety of sources and is targeted. The audio playing manner determined based on the first data better meets a playing requirement of a user in a current playing scenario, and the audio playing manner is more intelligent.

In a possible implementation, the determining, based on the first data, that an audio playing manner of the first device is a first manner in a plurality of manners includes: determining, according to a first preset rule, that the audio playing manner of the first device is the first manner in the plurality of manners when the first data meets the first condition, where the first preset rule indicates a correspondence between a condition that the first data is met and the audio playing manner of the first device; or the determining, based on the first data, that an audio playing manner of the first device is a first manner in a plurality of manners includes: using the first data as an input of a first model, to obtain an output of the first model, where the output of the first model is the first manner.

In this application, the first device may determine the audio playing manner according to the preset rule, or may determine the audio playing manner by using a machine model. A specific determining manner may be selected based on an actual scenario. Application scenarios are extensive, and product usability is high.

In a possible implementation, before the obtaining first data when a first trigger condition is met, the method further includes: when a first user plays the audio by using the first device, obtaining fifth data and a second manner of playing the audio by the first device, where the fifth data includes the data obtained by the at least one assisting device; and determining, based on the fifth data and the second manner, the first preset rule corresponding to the first user, or using the fifth data as the input of the first model, and using the second manner as the output of the first model, to train the first model corresponding to the first user.

In this application, when the user daily uses the first device to play an audio, the first device may self-learn a playing habit of the user, for example, determine a first preset rule or train the first model, and determine an audio playing manner according to such a preset rule or based on such a machine model. This better meets the user requirement, and the audio playing manner is more intelligent.

In a possible implementation, after the determining that the audio playing manner of the first device is a first manner in a plurality of manners, the method further includes: performing the first manner; receiving a second user operation used to switch the audio playing manner of the first device; switching, in response to the second user operation, the audio playing manner of the first device from the first manner to a third manner; and updating the first preset rule based on the first data and the third manner, or updating the first model based on the first data and the third manner.

In this application, when the determined first manner does not meet the user requirement, the first device may update the preset rule or the machine model, and determine the audio playing manner according to the preset rule or the machine model. This better meets the user requirement, and the audio playing manner is more intelligent.

In some embodiments, different users correspond to different preset rules. For example, when using the first device, the first user determines the audio playing manner according to the first preset rule. When using the first device, a second user determines an audio playing manner according to a second preset rule. In this way, the determined audio playing manner better meets the user requirement, and the audio playing manner is more intelligent.

In some embodiments, different users correspond to different models. For example, when using the first device, the first user determines the audio playing manner based on the first model. When using the first device, a second user determines an audio playing manner based on a second model. In this way, the determined audio playing manner better meets the user requirement, and the audio playing manner is more intelligent.

In a possible implementation, the assisting device is a device that logs in to a same account as the first device.

In this application, the user that uses the assisting device may be a user that uses the first device, which is referred to as a current user for short. It may be understood that the first data is for the current user. The audio playing manner determined based on the first data better meets a playing requirement of the current user, and the audio playing manner is more intelligent.

In a possible implementation, the first manner is stopping playing the audio. After the determining that an audio playing manner of the first device is a first manner in a plurality of manners, the method further includes: when stopping playing the audio provided by the first device, displaying prompt information, where the prompt information is used to prompt the user that the first device has no device available for playing the audio.

In this application, when determining to stop playing the audio, the first device may display the prompt information, so that the user can obtain a current audio playing status in time.

According to a second aspect, an embodiment of this application provides another audio playing method, applied to an assisting device. The method includes: receiving a request message sent by a first device when a first trigger condition is met, where the first trigger condition includes: a first instruction for playing an audio is received, or a connection to a device configured to play an audio is disconnected; and sending first data to the first device based on the request message, where the first data is used by the first device to determine that an audio playing manner is a first manner in a plurality of manners, and the plurality of manners include the following: playing the audio by using a loudspeaker of the first device, playing the audio by using a second device, and stopping playing the audio.

In this application, the first device may determine the audio playing manner based on the first data provided by the assisting device. The data used to determine the audio playing manner is from a variety of sources. The determined playing manner can be well applicable to a current playing scenario, and meets a playing requirement of a user in the current scenario. This avoids poor user experience caused by an inappropriate playing manner, the user does not need to perform a complex manual operation to adjust the audio playing manner, the audio playing manner is more intelligent, and product usability is high.

In a possible implementation, the second device is a device in the at least one assisting device, or the second device is a device connected to the at least one assisting device.

In this application, a device configured to play an audio provided by the first device may be an assisting device that provides the first data, or may be a device connected to the assisting device. Application scenarios are extensive, and product usability is improved.

In a possible implementation, the first data includes at least one of the following: a type of the assisting device, a status of the assisting device, a type of the device connected to the assisting device, and a status of the device connected to the assisting device. In some embodiments, the type of the assisting device or the type of the device connected to the assisting device includes a type distinguished by using hardware, for example, one type is a tablet computer, and another type is a smartphone. In some embodiments, the type of the assisting device or the type of the device connected to the assisting device includes a type distinguished by using software. For example, a type is a sound playing device, and the sound playing device is configured to play an audio provided by a sound source device.

In some embodiments, the status of the assisting device or the status of the device connected to the assisting device includes whether the assisting device is in a connectable state. In some embodiments, the status of the assisting device or the status of the device connected to the assisting device includes whether to play the audio as a sound playing device, where the sound playing device is configured to play the audio provided by a sound source device.

In this application, the first data may include information about the assisting device and/or information about the device connected to the assisting device. The first device may obtain, by using the first data, a status of a surrounding device. The determined audio playing manner better meets the playing requirement of the user in the current playing scenario, a success rate of performing the determined audio playing manner is high, and the audio playing manner is more intelligent.

In a possible implementation, the first data includes a status of the user, and the status of the user includes whether the user is in a sleep state or a motion state.

In some embodiments, the status of the user is data obtained by the assisting device whose type belongs to a wearable device.

In some embodiments, a user corresponding to the status of the user includes a user using the first device. In some embodiments, a user corresponding to the status of the user includes another user other than a user using the first device.

In a possible implementation, before the receiving a request message sent by a first device when a first trigger condition is met, the method further includes: determining a first type by negotiating with the first device. The sending first data to the first device based on the request message includes: sending, based on the request message, the first data whose data type is the first type to the first device.

In a possible implementation, the request information includes information indicating a second type. The sending first data to the first device based on the request message includes: sending, based on the request message, the first data whose data type is the second type to the first device.

In this application, a data type of the first data provided by the assisting device may be a data type negotiated with the first device in advance, or may be a data type indicated in the request message sent by the first device. A specific providing manner may be selected based on an actual scenario. Application scenarios are extensive, and product usability is high.

According to a third aspect, an embodiment of this application provides a communication system, including a first device and at least one assisting device. The first device is configured to provide an audio for playing, and the at least one assisting device is a device capable of communicating with the first device. The first device is configured to obtain first data when a first trigger condition is met. The first trigger condition includes: A first instruction for playing an audio is received, or a connection to a device configured to play an audio is disconnected. The first data includes data obtained by the at least one assisting device. The first device is configured to determine, based on the first data, that an audio playing manner of the first device is a first manner in a plurality of manners. The plurality of manners include the following manners: playing the audio by using a loudspeaker of the first device, playing the audio by using a second device, and stopping playing the audio.

In this application, the first device may determine the audio playing manner based on the first data. The first data includes data obtained by the at least one assisting device capable of communicating with the first device, and the data is from a variety of sources. The playing manner determined based on the first data can be well applicable to a current playing scenario, and meets a playing requirement of a user in the current scenario. This avoids poor user experience caused by an inappropriate playing manner, the user does not need to perform a complex manual operation to adjust the audio playing manner, the audio playing manner is more intelligent, and product usability is high.

In a possible implementation, the second device is a device in the at least one assisting device, or the second device is a device connected to the at least one assisting device.

In some embodiments, the plurality of manners further include playing the audio by using a device other than the second device. Optionally, the device other than the second device is a device in the at least one assisting device, or the device other than the second device is a device connected to the at least one assisting device.

In this application, a device configured to play the audio provided by the first device may be an assisting device that provides the first data, or may be a device connected to the assisting device. Application scenarios are extensive, and product usability is improved.

In a possible implementation, the first data includes at least one of the following: a type of the assisting device, a status of the assisting device, a type of the device connected to the assisting device, and a status of the device connected to the assisting device.

In some embodiments, the type of the assisting device or the type of the device connected to the assisting device includes a type distinguished by using hardware, for example, one type is a tablet computer, and another type is a smartphone. In some embodiments, the type of the assisting device or the type of the device connected to the assisting device includes a type distinguished by using software. For example, a type is a sound playing device, and the sound playing device is configured to play an audio provided by a sound source device.

In some embodiments, the status of the assisting device or the status of the device connected to the assisting device includes whether the assisting device is in a connectable state. In some embodiments, the status of the assisting device or the status of the device connected to the assisting device includes whether to play the audio as a sound playing device, where the sound playing device is configured to play the audio provided by a sound source device.

In this application, the first data may include information about the assisting device and/or information about the device connected to the assisting device. The first device may obtain, by using the first data, a status of a surrounding device. The determined audio playing manner better meets the playing requirement of the user in the current playing scenario, a success rate of performing the determined audio playing manner is high, and the audio playing manner is more intelligent.

In a possible implementation, the first data includes a status of the user, and the status of the user includes whether the user is in a sleep state or a motion state.

In some embodiments, the status of the user is data obtained by the assisting device whose type belongs to a wearable device.

In some embodiments, a user corresponding to the status of the user includes a user using the first device. In some embodiments, a user corresponding to the status of the user includes another user other than a user using the first device.

In a possible implementation, the second device is a wireless headset, and the first data includes: When the user is in the sleep state or the motion state, the first manner is playing the audio by using the second device.

In this application, the first data may include the status of the user. The first device may obtain a status of a current user (the user using the first device) and/or a surrounding user by using the first data. The determined audio playing manner better meets the playing requirement of the user in the current playing scenario, and avoids a case in which an inappropriate audio playing manner affects the user in a specific state. The audio playing manner is more intelligent.

In a possible implementation, the first data includes current time and/or a location of the first device.

In some embodiments, the current time and the location of the first device are detected by the first device, instead of being obtained by the assisting device. This reduces unnecessary data transmission and reduces power consumption.

In a possible implementation, when the second device is a smart speaker, the current time belongs to a preset leisure period, and the location of the first device belongs to preset family space, the first manner is playing the audio by using the second device. Alternatively, when the second device is a wireless headset, the current time belongs to a preset rest period, and the location of the first device belongs to preset family space, the first manner is playing the audio by using the second device. Alternatively, when the second device is a wireless headset, and the location of the first device belongs to preset outdoor space, the first manner is playing the audio by using the second device.

In this application, the first data may include the current time and the location of the first device. The first device may predict the current playing scenario based on the first data. The determined audio playing manner better meets the playing requirement of the user in the current playing scenario, and the audio playing manner is more intelligent.

In a possible implementation, the first trigger condition includes: The first instruction is received; when the first trigger condition is met, the first device is not connected to the second device, and a device most recently connected to the second device is a device other than the first device. The first data includes a status of the second device, the status of the second device is a connectable state, and the first manner is playing the audio by using the second device. The first device is further configured to: after determining that the audio playing manner of the first device is the first manner in the plurality of manners, establish a connection to the second device, and play the audio by using the second device.

In this application, when the first device determines, based on the first data, to play the audio by using the second device, the first device may establish the connection to the second device even if a device that is most recently connected to the second device is not the first device, to play the audio by using the second device. In this way, the audio playing manner that better meets the user requirement is used, and user experience is ensured.

In a possible implementation, the first trigger condition includes: The connection to the device configured to play the audio is disconnected, the first data includes a type of the second device and a status of the second device, the type of the second device is the same as a type of the device configured to play the audio, the status of the second device is a connectable state, and the first manner is playing the audio by using the second device. The first device is further configured to: after the determining that the audio playing manner of the first device is the first manner in the plurality of manners, establish a connection to the second device, and play the audio by using the second device.

In this application, when the first trigger condition is that the connection to the device configured to play the audio is disconnected, when determining the audio playing manner based on the first data, the first device may preferably select the second device that is of a same type as the foregoing device configured to play the audio, to play the audio. This reduces a "disconnection sense", and better meets a user requirement, and the audio playing manner is more intelligent.

In a possible implementation, the obtaining first data includes: sending a request message to a third device, and receiving second data sent by the third device based on the request message. The first data includes the second data, and the third device is a device in the at least one assisting device, or the third device is a device that receives the second data sent by the assisting device.

In this application, the first device may directly obtain the first data from the assisting device, or may obtain the first data from another device. A specific obtaining manner may be selected based on an actual scenario. Application scenarios are extensive, and product usability is high.

In a possible implementation, the request message includes information indicating a data type of the second data; or the first device is further configured to: before obtaining the first data, determine the data type of the second data by negotiating with the third device.

In this application, when obtaining the first data, the first device may indicate a required data type in the request message, or may negotiate a required data type in advance. A specific obtaining manner may be selected based on an actual scenario. Application scenarios are extensive, and product usability is high.

In a possible implementation, the obtaining first data includes: receiving third data sent by a fourth device in the at least one assisting device, and receiving fourth data sent by a fifth device in the at least one assisting device. The first data includes the third data and the fourth data, a type of the fourth device and a type of the fifth device are different, and a type of the third data and a type of the fourth data are different.

In this application, different types of assisting devices may provide different types of data, and the data is from a variety of sources and is targeted. The audio playing manner determined based on the first data better meets a playing requirement of a user in a current playing scenario, and the audio playing manner is more intelligent.

In a possible implementation, the determining, based on the first data, that an audio playing manner of the first device is a first manner in a plurality of manners includes: determining, according to a first preset rule, that the audio playing manner of the first device is the first manner in the plurality of manners when the first data meets the first condition, where the first preset rule indicates a correspondence between a condition that the first data is met and the audio playing manner of the first device; or the determining, based on the first data, that an audio playing manner of the first device is a first manner in a plurality of manners includes: using the first data as an input of a first model, to obtain an output of the first model, where the output of the first model is the first manner.

In this application, the first device may determine the audio playing manner according to the preset rule, or may determine the audio playing manner by using a machine model. A specific determining manner may be selected based on an actual scenario. Application scenarios are extensive, and product usability is high.

In a possible implementation, the first device is further configured to: before the first data is obtained when the first trigger condition is met, when a first user plays the audio by using the first device, obtain fifth data and a second manner of playing the audio by the first device, where the fifth data includes data obtained by the at least one assisting device; and determine, based on the fifth data and the second manner, the first preset rule corresponding to the first user, or use the fifth data as the input of the first model, and use the second manner as the output of the first model, to train the first model corresponding to the first user.

In this application, when the user daily uses the first device to play an audio, the first device may self-learn a playing habit of the user, for example, determine a first preset rule or train the first model, and determine an audio playing manner according to such a preset rule or based on such a machine model. This better meets the user requirement, and the audio playing manner is more intelligent.

In a possible implementation, the first device is further configured to: after determining that the audio playing manner of the first device is the first manner in the plurality of manners, perform the first manner; receive a second user operation used to switch the audio playing manner of the first device; switch, in response to the second user operation, the audio playing manner of the first device from the first manner to a third manner; and update the first preset rule based on the first data and the third manner, or update the first model based on the first data and the third manner.

In this application, when the determined first manner does not meet the user requirement, the first device may update the preset rule or the machine model, and determine the audio playing manner according to the preset rule or the machine model. This better meets the user requirement, and the audio playing manner is more intelligent.

In some embodiments, different users correspond to different preset rules. For example, when using the first device, the first user determines the audio playing manner according to the first preset rule. When using the first device, a second user determines an audio playing manner according to a second preset rule. In this way, the determined audio playing manner better meets the user requirement, and the audio playing manner is more intelligent.

In some embodiments, different users correspond to different models. For example, when using the first device, the first user determines the audio playing manner based on the first model. When using the first device, a second user determines an audio playing manner based on a second model. In this way, the determined audio playing manner better meets the user requirement, and the audio playing manner is more intelligent.

In a possible implementation, the assisting device is a device that logs in to a same account as the first device.

In this application, the user that uses the assisting device may be a user that uses the first device, which is referred to as a current user for short. It may be understood that the first data is for the current user. The audio playing manner determined based on the first data better meets a playing requirement of the current user, and the audio playing manner is more intelligent.

According to a fourth aspect, an embodiment of this application provides an electronic device, including a transceiver, a processor, and a memory. The memory is configured to store computer program code, and the computer program code includes computer instructions. The processor invokes the computer instructions to enable the user equipment to perform the audio playing method according to any one of the first aspect and the second aspect of embodiments of this application and the implementations of the first aspect and the second aspect.

According to a fifth aspect, an embodiment of this application provides a computer storage medium. The computer storage medium stores a computer program, and the computer program includes program instructions. When the program instructions are executed by a processor, the audio playing method according to any one of the first aspect and the second aspect of embodiments of this application and the implementations of the first aspect and the second aspect is performed.

According to a sixth aspect, an embodiment of this application provides a computer program product. When the computer program product runs on a communication device, the communication device is enabled to perform the audio playing method according to any one of the first aspect and the second aspect of embodiments of this application and the implementations of the first aspect and the second aspect.

According to a seventh aspect, an embodiment of this application provides an electronic device. The electronic device includes an apparatus for performing the method described in any embodiment of this application. The electronic device is, for example, a chip.

It should be understood that descriptions of technical features, technical solutions, beneficial effect, or similar words in this application do not imply that all features and advantages can be implemented in any individual embodiment. On the contrary, it may be understood that the descriptions of the features or the beneficial effect mean that at least one embodiment includes a specific technical feature, technical solution, or beneficial effect. Therefore, the descriptions of the technical features, the technical solutions, or the beneficial effect in this specification may not necessarily be specific to a same embodiment. Further, the technical features, the technical solutions, and the beneficial effect described in embodiments may also be combined in any appropriate manner. A person skilled in the art may understand that an embodiment may be implemented without one or more specific technical features or technical solutions, or beneficial effect in a specific embodiment. In other embodiments, additional technical features and beneficial effect may be identified in a specific embodiment that does not reflect all embodiments.

### BRIEF DESCRIPTION OF DRAWINGS

The following describes the accompanying drawings used in embodiments of this application.
FIG. 1 is a schematic diagram of an architecture of a communication system according to an embodiment of this application;
FIG. 2A is a schematic diagram of a hardware structure of an electronic device according to an embodiment of this application;
FIG. 2B is a schematic diagram of a software architecture of an electronic device according to an embodiment of this application;
FIG. 3A-1 to FIG. 3C-3 are schematic diagrams of some application scenarios according to an embodiment of this application;
FIG. 4 and FIG. 5 are schematic flowcharts of some audio playing methods according to an embodiment of this application;
FIG. 6A is a schematic diagram of training a machine model according to an embodiment of this application;
FIG. 6B is a schematic diagram of using a machine model according to an embodiment of this application;
FIG. 7 is a schematic diagram of a structure of a primary device according to an embodiment of this application; and
FIG. 8(A) and FIG. 8(B) are a schematic diagram of an embodiment of a user interface according to an embodiment of this application.

### DESCRIPTION OF EMBODIMENTS

The following clearly describes the technical solutions in embodiments of this application in detail with reference to the accompanying drawings. Terms used in implementations of embodiments of this application are merely used to explain specific embodiments of this application, and are not intended to limit this application.

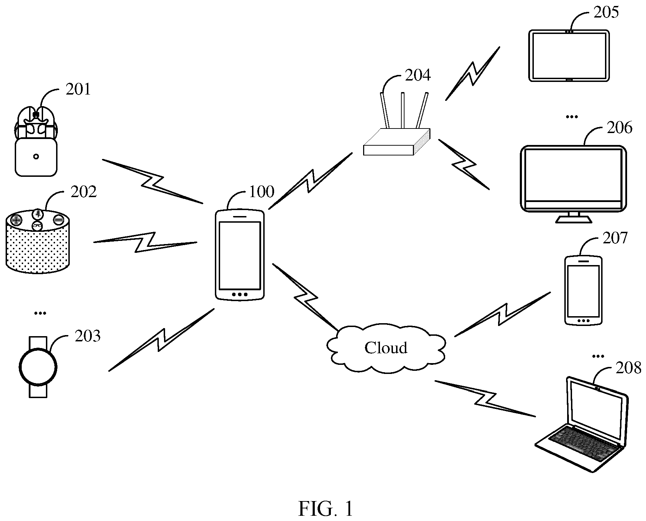

FIG. 1 is a schematic diagram of an architecture of a communication system according to an embodiment of this application.

As shown in FIG. 1, an electronic device 100 may be connected to at least one electronic device 200 in a wired manner and/or a wireless manner. The wired manner includes, for example, a high definition multimedia interface (high definition multimedia interface, HDMI), a universal serial bus (universal serial bus, USB), a coaxial cable, and an optical fiber. The wireless manner includes, for example, Bluetooth, wireless fidelity (wireless fidelity, Wi-Fi), near field communication (near field communication, NFC), and an ultra-wideband (ultra-wideband, UWB).

In some embodiments, the electronic device 100 may be directly connected to and communicate with the at least one electronic device 200. For example, as shown in FIG. 1, the electronic device 100 is a smartphone, and the electronic device 100 is connected to a wireless headset 201 and a smartwatch 203 through Bluetooth, and is connected to a smart speaker 202 and a gateway device (for example, a router) 204 through Wi-Fi. The electronic device 200 may include the wireless headset 201, the smart speaker 202, the smartwatch 203, and the gateway device 204.

In some embodiments, the electronic device 100 may be indirectly connected to the at least one electronic device 200. Optionally, the electronic device 100 may be connected to and communicate with the at least one electronic device 200 by using a connected device. For example, as shown in FIG. 1, the electronic device 100 is a smartphone, and the electronic device 100 may communicate with a tablet computer 205, a desktop computer 206, and the like by using a connected gateway device 204. The electronic device 200 may include the tablet computer 205 and the desktop computer 206. The electronic device 100 may communicate with a smartphone 207, a notebook computer 208, and the like by using a cloud. The cloud includes, for example, at least one server. The server may be a hardware server, or may be a virtual server. The electronic device 200 may include the smartphone 207 and the notebook computer 208.

A manner of performing communication by using the cloud is not limited in this application. For example, when both the electronic device 100 and the notebook computer 208 are installed with an application A, and log in to a same account or an associated account by using the application A, the electronic device 100 may communicate with the notebook computer 208 by using the cloud (for example, including an application server configured to provide a service for the application A). This application is not limited thereto. Alternatively, an application may not be installed, and an account may be logged in to in another form, for example, an applet, or an account may not be logged in to.

In some embodiments, although the electronic device 100 is not connected to the electronic device 200, the electronic device 100 may establish a connection to the electronic device 200 and then communicate with the electronic device 200. It may be understood that the electronic device 200 is an electronic device that is not connected to the electronic device 100 but can communicate with the electronic device 200. Optionally, the electronic device 100 may store connection information (for example, a Bluetooth address and a password, and a Wi-Fi name and a password) of the at least one electronic device 200, and may be connected to the electronic device 200 by using the connection information (for example, send information including the password to an electronic device 300 corresponding to the Bluetooth address, to request to establish a connection). Optionally, the connection information of the electronic device 200 may be obtained when the electronic device 100 is previously connected to the electronic device 200. Optionally, the connection information of the electronic device 200 may be obtained by the electronic device 100 by using a cloud. For example, after logging in to an account A, the electronic device 100 may obtain the connection information of the electronic device 200 that has previously logged in to the account A. A manner in which the electronic device 100 obtains the connection information of the electronic device 200 is not limited in this application.

The electronic device shown in FIG. 1 is merely an example, and a specific device form is not limited. Any electronic device in embodiments of this application may be a user terminal device, for example, a mobile phone, a tablet computer, a handheld computer, or a personal digital assistant (Personal Digital Assistant, PDA), a smart home device, for example, a smart television or a smart camera, a wearable device, for example, a smart band, a smart watch, or smart glasses, or another device, for example, a desktop computer, a notebook computer, an ultra-mobile personal computer (Ultra-mobile Personal Computer, UMPC), a netbook, or a smart screen.

The following describes an example electronic device in this application. The electronic device 100 shown in FIG. 1 is used as an example for description. Description of the electronic device 200 is similar. Details are not described again.

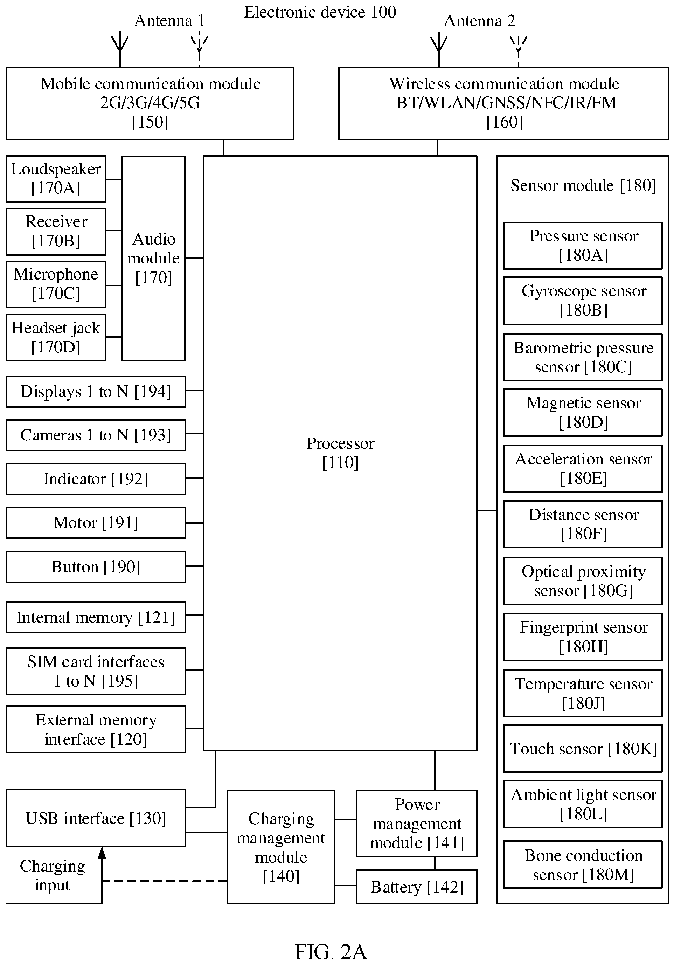

FIG. 2A is a schematic diagram of a hardware structure of an electronic device according to an embodiment of this application.

As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural network processing unit, NPU), and/or the like. Different processing units may be independent devices, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that have been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset, to play an audio by using the headset. The interface may be further configured to connect to another electronic device like an AR device.

It may be understood that an interface connection relationship between modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communication module 150, the wireless communication module 160, the modem processor, the baseband processor, and the like.

In some embodiments, when the electronic device 100 is connected to a device configured to play an audio (which is referred to as a sound playing device for short), an audio provided by the electronic device 100 may be played by using the sound playing device. The electronic device 100 may be referred to as a sound source device. For example, when the electronic device 100 is connected to a wireless headset (for example, a Bluetooth headset) by using the wireless communication function, a user may listen to music provided by the electronic device 100 by wearing the wireless headset. For another example, when the electronic device 100 is connected to a smart speaker by using the wireless communication function, music provided by the electronic device 100 may be played by using the smart speaker.

The antenna 1 and the antenna 2 are configured to send and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the loudspeaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one camera 193 or N cameras 193, where N is a positive integer greater than 1.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the loudspeaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The loudspeaker 170A, also referred to as a "horn", is configured to convert an electrical audio signal into a sound signal. The user may listen to music, answer a hands-free call, or the like by using the loudspeaker 170A of the electronic device 100. In this case, both the sound playing device and the sound source device that are used to play an audio may be the electronic device 100.

The receiver 170B, also referred to as an "earpiece", is configured to convert an audio electrical signal into a sound signal. When a user answers a call or a voice call by using the receiver 170B of the electronic device 100, the user may answer the voice call by placing the receiver 170B close to a human ear. In this case, both the sound playing device and the sound source device that are used to play an audio may be the electronic device 100.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface. When the headset interface 170D is connected to a wired headset, the user may listen to the audio of the electronic device 100 by wearing the wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is performed.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 100 at a location different from that of the display 194.

A software system of the electronic device 100 may use a layered architecture, an event-driven architecture, a microkernel architecture, a micro service architecture, or a cloud architecture. For example, a software system of a layered architecture may be an Android (Android) system, or may be a Huawei mobile services (Huawei mobile services, HMS) system. In embodiments of this application, an Android system with a layered architecture is used as an example to describe the software structure of the terminal.

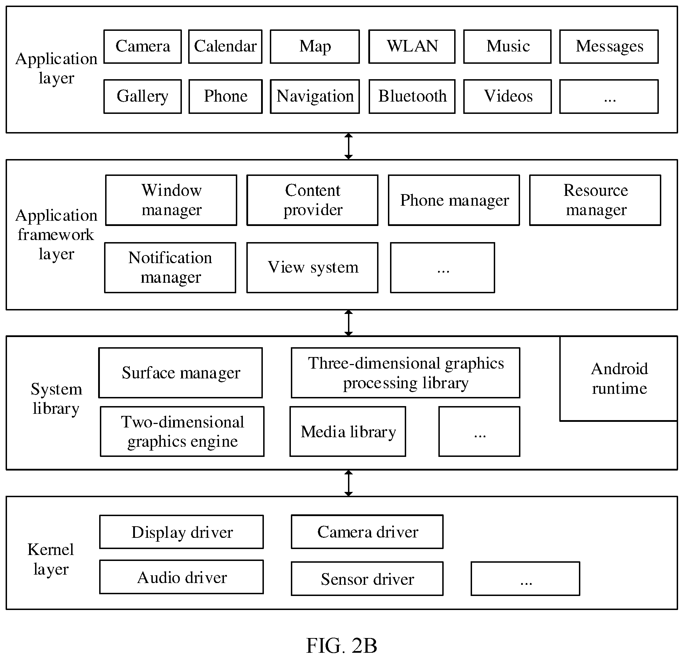

FIG. 2B is a schematic diagram of a software architecture of the electronic device 100 according to an embodiment of this application.

In a hierarchical architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2B, the application package may include application programs such as Camera, Calendar, Map, WLAN, Music, Messages, Gallery, Phone, Navigation, Bluetooth, and Videos.

The application framework layer provides an application programming interface (application programming interface, API) and a programming framework for the applications at the application layer. The application framework layer includes some predefined functions.

As shown in FIG. 2B, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, an audio, calls that are dialed and answered, a browsing history, a bookmark, a phone book, and the like.

The view system includes visual controls such as a control for displaying a text and a control for displaying a picture. The view system may be configured to construct an application program. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of common audio and video formats, a static image file, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes working procedures of software and hardware of the electronic device 100 as examples with reference to a music playing scenario.

It is assumed that the electronic device 100 is connected to the wireless headset by using a wireless communication function. When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. It is assumed that the touch operation is a touch tap operation, and a control corresponding to the tap operation is a control used to play music in a music application. The music application may invoke an interface of the application framework layer, and then invoke the audio driver of the kernel layer, to control the wireless headset to play music. The electronic device 100 is used as a sound source to provide audio data, and the wireless headset is used as a sound playing device to play an audio provided by the sound source.

Currently, audio playing manners are rich. For example, when the electronic device 100 is used as a sound source to provide an audio, the audio may be played by using a connected sound playing device (for example, a device, for example, a wireless headset or a smart speaker, that is connected to the wireless communication module 160), or the audio may be played by using the loudspeaker 170A (which is referred to as a loudspeaker manner for short), or the audio may be played by using the receiver 180B (which is referred to as an earpiece manner for short). However, the audio playing manner is not intelligent enough to meet a user requirement, and the product usability is low. Specific examples are as follows.

For example, the wireless headset actively connects, by default, to a device that is connected last time. If the connection fails, no operation is performed. When a user uses a smartphone as a sound source to play an audio, if the smartphone is not the device that is connected to the wireless headset last time, the smartphone may play the audio in a loudspeaker manner by mistake unless the user manually connects the wireless headset to the smartphone, or first disables an audio playing function of the smartphone. To achieve an audio playing manner required by the user, a complex user operation is required, and user experience is poor.

For example, in a multi-screen collaboration state, a smartphone is connected to a computer, and the smartphone is connected to a wireless headset. When the computer is used as a sound source, an audio may be played by using the wireless headset. However, if a connection between the smartphone and the computer is disconnected, the computer may play the audio in a loudspeaker manner by mistake unless a user manually connects the wireless headset to the computer, or first disables an audio playing function of the computer. To achieve an audio playing manner required by the user, a complex user operation is required, and user experience is poor. Alternatively, the user needs to keep a connection between the smartphone and the computer, for example, the user cannot carry the mobile phone out of a communication range of the computer. This limits a use scenario.

An embodiment of this application provides an audio playing method, so that a primary device can intelligently adjust an audio playing manner based on data (which may be referred to as linkage data) of a secondary device. The primary device is used as a sound source to provide audio data, and is configured to perform the foregoing adjusted audio playing manner. The secondary device is at least one device capable of communicating with the primary device. A type of the secondary device and a quantity of secondary devices may not be limited, and a type and an amount of linkage data may not be limited either. Therefore, a use scenario of the method is universal. In a full-scenario mode, an advantage of the internet of everything is fully used to adjust the audio playing manner, so that poor user experience caused by an inappropriate audio playing manner can be effectively avoided, and product usability is high.

For example, in the system shown in FIG. 1, the electronic device 100 may be used as the sound source to provide the audio data (the electronic device 100 is the foregoing primary device), and the electronic device 100 may obtain data of the electronic device 100, and also obtain data of the at least one electronic device 200 capable of communicating with the electronic device 100 (the electronic device 200 is the foregoing secondary device, and the obtained data of the electronic device 200 is the foregoing linkage data). The electronic device 100 may determine an audio playing manner with reference to the data of the electronic device 100 and the linkage data, and perform the determined audio playing manner.

For ease of description, for any electronic device, data obtained by the electronic device may be referred to as status data. When the electronic device is a primary device, status data of an electronic device capable of communicating with the electronic device is the foregoing linkage data. It may be understood that the status data and the linkage data are relative concepts. For example, the linkage data for the electronic device 100 is status data for the electronic device 200.

Types of the status data and the linkage data are not limited in this application, for example, but are not limited to current time, a current location, whether a device is connected to a network, a status of the device, a type of the device, information about a connected device (for example, a status of the connected device and a type of the connected device), and user status information indicating whether a user is in a sleep state or a motion state.

In some embodiments, the status of the device may include whether the device is in a connectable state. For example, a signal can be found. In some embodiments, the status of the device may include whether the device is used as a sound playing device to play an audio.

In some embodiments, the type of the device may include a type distinguished by hardware. For example, a tablet computer and a smartphone belong to two device types. In some embodiments, the type of the device may include a type distinguished by software, for example, whether the device is a sound playing device. In this case, the primary device does not need to determine a sound playing device that can be configured to play an audio. This reduces processing pressure of the primary device.

A manner in which the electronic device obtains the status data of the electronic device is not limited in this application. For example, the electronic device 100 directly determines the current time based on system time. For another example, the electronic device 100 obtains a current location by using a GPS. For another example, the electronic device 100 may learn, by using the mobile communication module 150 and/or the wireless communication module 160, whether the electronic device 100 is connected to another device and a quantity of connected devices. For another example, the electronic device 100 may obtain an ambient environment and a user image through photographing by using the camera 193. For another example, the electronic device 100 may obtain posture information of the electronic device 100 based on signals detected by the gyroscope sensor 180B and the acceleration sensor 180E. For another example, the electronic device 100 may directly obtain information about the connected device from stored data, for example, may directly obtain an identifier and an address, of the electronic device 200 when being connected to the electronic device 200. An example of a manner in which the electronic device 200 obtains status data of the electronic device 200 is similar. Details are not described again.

A manner in which the electronic device obtains the linkage data is not limited in this application. For example, the electronic device 100 may directly obtain the status data of the electronic device 200 from stored data, for example, may directly obtain an identifier and an address of the electronic device 200 when being connected to the electronic device 200. For another example, the electronic device 100 may directly receive the status data of the electronic device 200 from the electronic device 200. For example, the electronic device 100 may send request information to the electronic device 200 by using the mobile communication module 150 and/or the wireless communication module 160, and receive the linkage data sent by the electronic device 200 based on the request information. For another example, the electronic device 100 may indirectly receive the status data of the electronic device 200, that is, receive the status data of the electronic device 200 from another device. For example, when logging in to an account B, the electronic device 200 may send the status data of the electronic device 200 to the cloud, and subsequently the electronic device 100 may obtain the status data of the electronic device 200 from the cloud by using the account B.

The following describes an example of an application scenario in embodiments of this application.

FIG. 3A-1 and FIG. 3A-2 are an example schematic diagram of an application scenario.

As shown in FIG. 3A-1 and FIG. 3A-2, when a wireless headset is connected to a mobile phone A, a user may wear the wireless headset to listen to an audio provided by the mobile phone A that is used as a sound source. The mobile phone A may display a user interface 310 of a music application. The user interface 310 represents that a "Song A" is being played currently, that is, the wireless headset is used as a sound playing device to play an audio of the "Song A" provided by the mobile phone A that is used as a sound source. After the wireless headset is disconnected from the mobile phone A, and before the wireless headset is connected to another device, for the wireless headset, the mobile phone A is a device connected last time (which may also be referred to as a most recently connected device). After the wireless headset is started (for example, after the user takes the wireless headset out of a charging case), the wireless headset actively connects to the device connected last time. If the connection fails (for example, the mobile phone A is not in a communication range of the wireless headset, or a Bluetooth function of the mobile phone A is not enabled), the wireless headset is in a free state. In the free state, a Bluetooth function of the wireless headset remains enabled, but the wireless headset does not actively connect to the another device. A device in the communication range of the wireless headset may search for the wireless headset through Bluetooth, and the wireless headset may receive a connection request sent by the another device. This application is not limited thereto. In some other embodiments, if the wireless headset has not been connected to any device, for example, when the wireless headset is started for the first time after delivery, the wireless headset may also be in a free state. A prerequisite for the wireless headset to be in the free state is not limited in this application.

As shown in FIG. 3A-1 and FIG. 3A-2, a mobile phone B displays a user interface 320 of a music application. The user interface 320 is used to display information about a playlist, for example, a playlist name 321: "Playlist 1 ", and a song list 322 included in the playlist. The song list 322 includes, for example, a plurality of songs such as a song 1, a song 2, a song 3, and a song 4. The user interface 320 may further include a playing control 323, and the playing control 323 is used to play a song in the playlist.

In some embodiments, when the wireless headset is in the free state, the mobile phone B may receive a user operation for playing an audio. For example, the mobile phone B may receive a touch operation (for example, a tap operation) performed on a control of any song in the song list 322, and in response to the touch operation, play an audio of the song corresponding to the control. For another example, the mobile phone B may receive a touch operation (for example, a tap operation) performed on the playing control 323, and play an audio of a song in the "Playlist 1" in response to the touch operation, for example, sequentially play the songs in the "Playlist 1" in sequence.

In some embodiments, in response to the user operation for playing an audio, the mobile phone B may detect at least one device capable of communicating with the mobile phone B, and send request information to the detected device. A device that receives the request information may send linkage data to the mobile phone B based on the request information. For example, when finding the wireless headset through Bluetooth, the mobile phone B may send the request information to the wireless headset, and the wireless headset may send linkage data to the mobile phone B based on the request information.

In some embodiments, the mobile phone B may determine an audio playing manner based on the linkage data. Optionally, the mobile phone B may obtain status data of the mobile phone B, and determine the audio playing manner with reference to the status data and the linkage data. For example, the mobile phone B may obtain a location (belonging to the status data of the mobile phone B) of the mobile phone B in a manner, for example, a GPS, and determine that the location belongs to outdoor space. The linkage data may include that the wireless headset currently does not play an audio. The mobile phone B may determine, based on the linkage data, that the wireless headset is currently in an idle state and may be configured to play an audio. With reference to the status data and the linkage data of the mobile phone B, the mobile phone B may determine, based on a self-learned user habit (it is assumed that the user habitually plays an audio by using the wireless headset in the outdoor space, and the user habitually plays an audio in a loudspeaker manner in family space), that the audio playing manner is playing by using the wireless headset. Therefore, the mobile phone B may send connection request information to the wireless headset, to establish a connection to the wireless headset. For example, the mobile phone B may obtain a Bluetooth address of the wireless headset from a memory, and send the connection request information to a device corresponding to the Bluetooth address. After establishing the connection to the wireless headset, the mobile phone B may indicate the wireless headset to play an audio. In this case, the user may wear the wireless headset to listen to an audio provided by the mobile phone B that is used as a sound source.

This application is not limited to the foregoing examples. In some other examples, when the mobile phone B receives the user operation for playing an audio, the wireless headset may be in a connected state (for example, still connected to the mobile phone A). It is assumed that a connection manner of the wireless headset is a preemptive manner, that is, when the wireless headset is in the connected state, a connection request of another device may also be received, a current connection may be canceled when the connection request is accepted, and the wireless headset is connected to the another device. When a status of the wireless headset in the linkage data obtained by the mobile phone B is a connectable state (for example, a Bluetooth signal can be found), the mobile phone B determines that the audio playing manner is playing an audio by using the wireless headset. The mobile phone B may directly send connection request information to the wireless headset. When accepting the request, the wireless headset may cancel the connection to the mobile phone A and connect to the mobile phone B. The mobile phone B may play an audio by using the wireless headset. The linkage data may further include, for example, whether the connection manner is the preemptive manner.

This application is not limited to the foregoing examples. In some other examples, when the mobile phone B receives the user operation for playing an audio, the wireless headset may be in a connected state (for example, still connected to the mobile phone A), and the linkage data of the mobile phone B may include data obtained by the mobile phone A, for example, a device type of the mobile phone A, a device type of the wireless headset connected to the mobile phone A, and a status of the wireless headset connected to the mobile phone A. In other words, status data of the wireless headset may be sent to the mobile phone B by using the mobile phone A.

This application is not limited to the foregoing examples. In some other examples, the linkage data may include that the wireless headset is currently playing an audio (for example, connected to another audio source device). It is assumed that a connection manner of the wireless headset is not a preemptive manner, and if the mobile phone B further has another wireless headset capable of communicating with the mobile phone B, it may be determined that the playing manner is playing by using the another wireless headset capable of communicating with the mobile phone B. If the mobile phone B is connected to the another wireless headset capable of communicating with the mobile phone B, the mobile phone B directly indicates the another wireless headset capable of communicating with the mobile phone B, to play an audio. Alternatively, if the mobile phone B is not connected to the another wireless headset capable of communicating with the mobile phone B, the mobile phone B is first connected to the another wireless headset capable of communicating with the mobile phone B, and then indicates the another wireless headset capable of communicating with the mobile phone B, to play an audio.

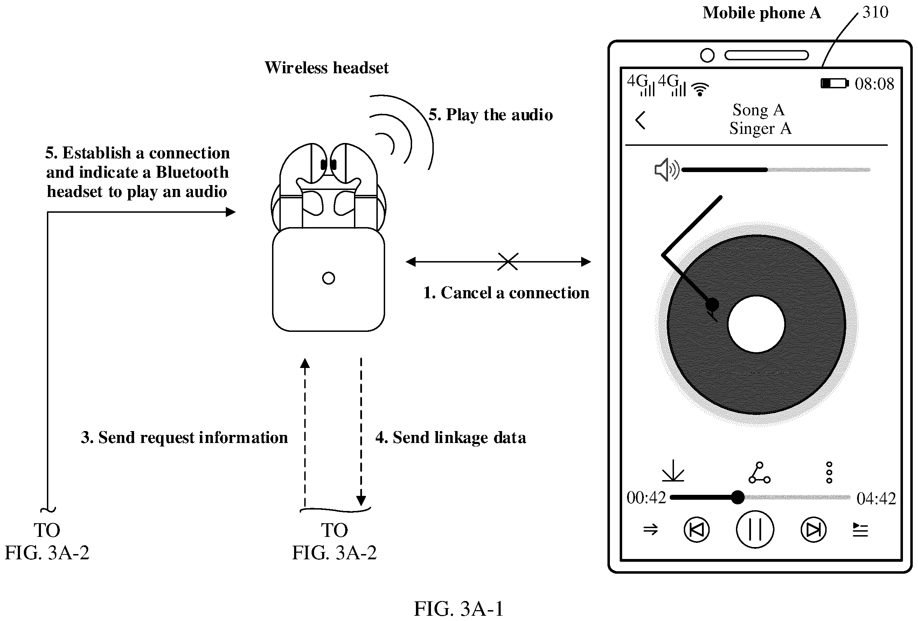

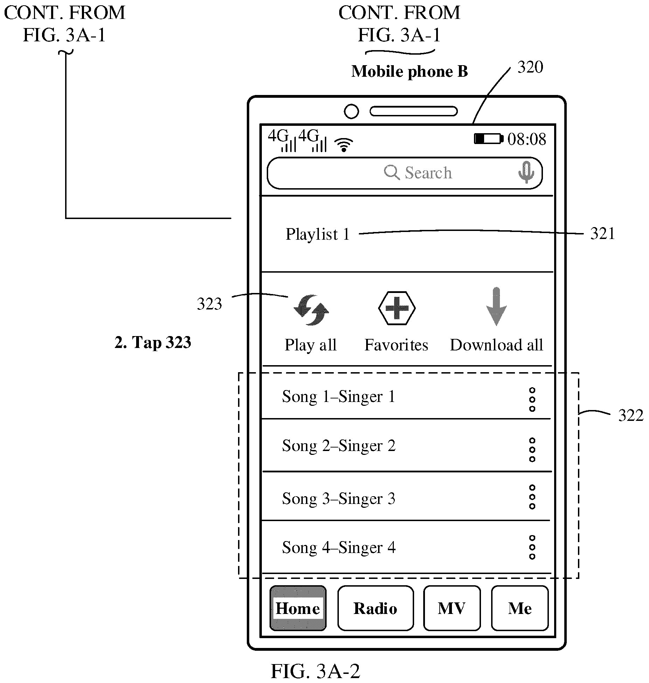

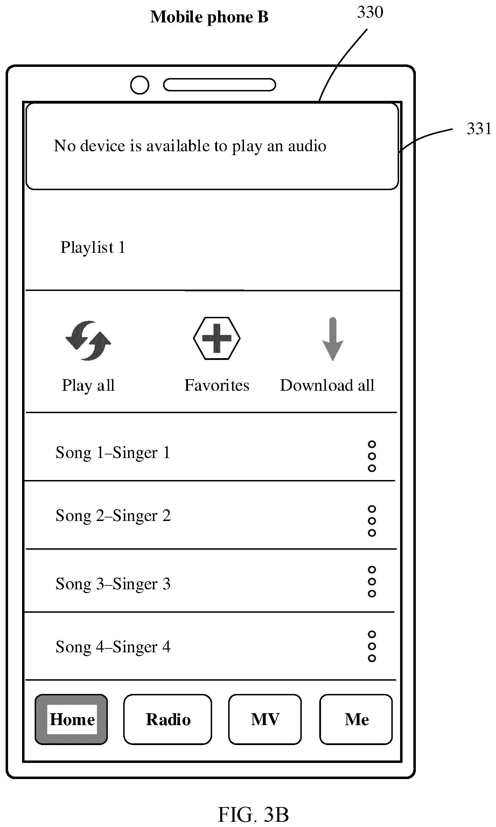

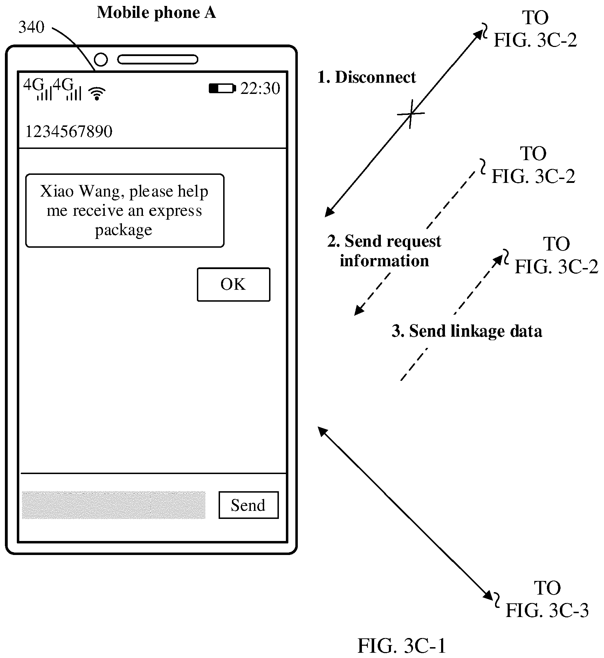

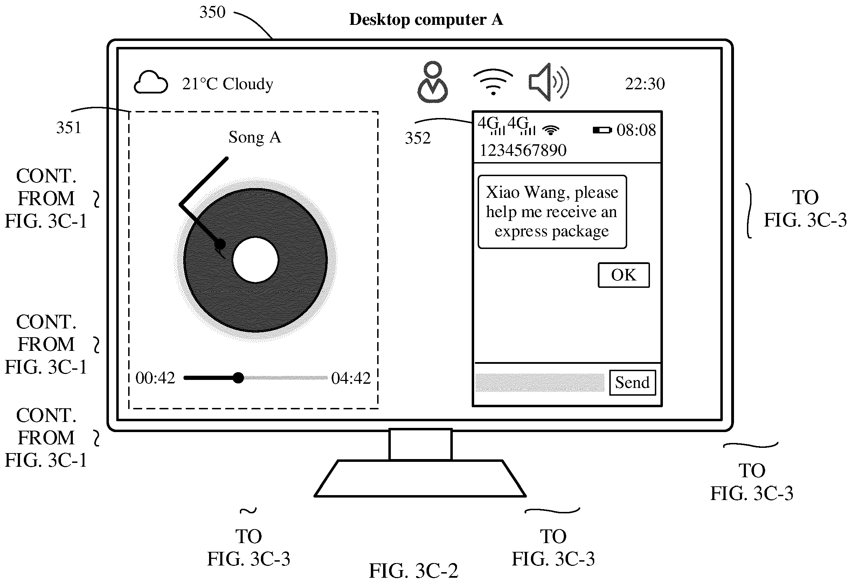

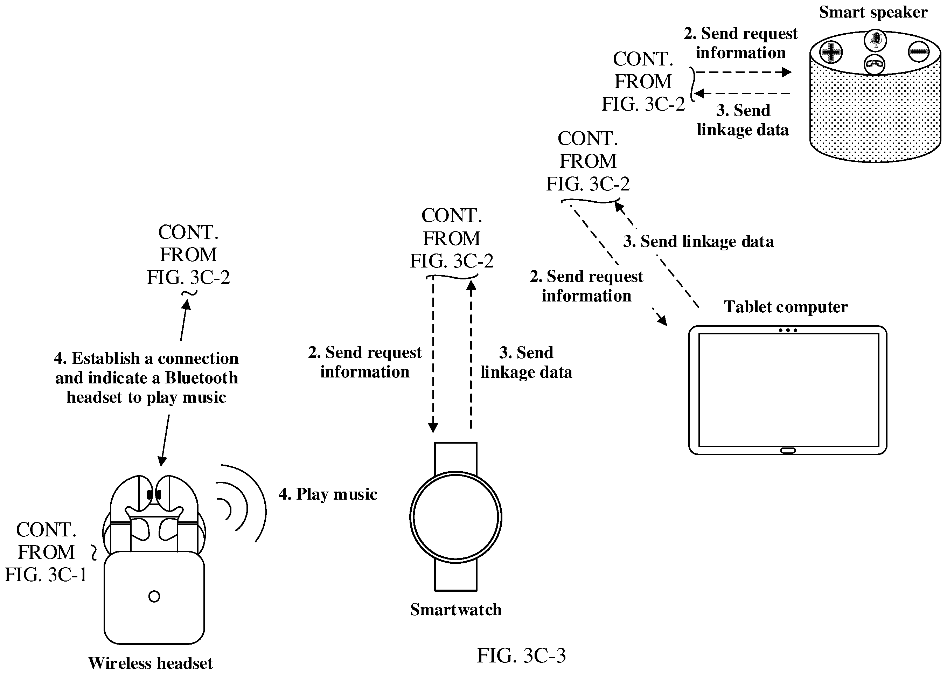

This application is not limited to the foregoing examples. In some other examples, the linkage data may include that the wireless headset is currently playing an audio (for example, connected to another audio source device). It is assumed that a connection manner of the wireless headset is not a preemptive manner, the mobile phone B may determine that the playing manner (playing by using the wireless headset) habitually used by the user in a current scenario cannot be performed. Therefore, the mobile phone B may determine that the audio playing manner is stopping playing, and display prompt information. A specific example is shown in FIG. 3B. The mobile phone B may display a user interface 330 of the music application. The user interface 330 is similar to the user interface 320 shown in FIG. 3A-1 and FIG. 3A-2, but further includes prompt information 331. The prompt information 331 may include a text: "No device is available to play an audio", and may be used to prompt the user that the mobile phone B cannot be connected to a sound playing device currently, for example, the wireless headset, to play an audio. The user may select the audio playing manner with reference to the prompt information, for example, manually start and connect the mobile phone B to another wireless headset, to avoid playing in a loudspeaker manner by mistake.

In some embodiments, the linkage data may include a connection manner of a device, for example, whether the connection manner is the preemptive manner. A primary device may determine an audio playing manner with reference to the connection manner of the device. For example, in the foregoing descriptions of some other examples, in two cases in which the connection manner of the wireless headset is the preemptive manner and the connection manner of the wireless headset is not the preemptive manner, processing logic of determining the audio playing manner by the mobile phone B is different.

This application is not limited to the foregoing examples. The mobile phone B may alternatively obtain data of another device other than the wireless headset. For example, the user further wears a smartwatch, and the linkage data of the mobile phone B may include data of the smartwatch, used to determine the audio playing manner.

It may be understood that, after receiving the user operation for playing an audio, the mobile phone B does not directly play the audio in the loudspeaker manner, but determines the audio playing manner with reference to the status data, the linkage data, and the self-learned user habit of the mobile phone B. The user does not need to manually connect the determined sound playing device (for example, the foregoing wireless headset) to the mobile phone B. This reduces an unnecessary user operation, avoids playing in the loudspeaker manner by mistake, and improves user experience.

FIG. 3C-1 to FIG. 3C-3 are an example schematic diagram of another application scenario.

As shown in FIG. 3C-1 to FIG. 3C-3, a mobile phone A and a desktop computer A may be connected and implement multi-screen collaboration. The mobile phone A may display a user interface 340 of an SMS message. A screen of the mobile phone A may be projected onto a screen of the desktop computer A. The desktop computer A may display a user interface 350. The user interface 350 may include a music window 351 and a projection window 352. The music window 351 represents that a "Song A" is being played currently. The projection window 352 may be used to display a screen of a multi-screen collaboration device (namely, the mobile phone A), namely, the user interface 340 of the mobile phone A. In addition, the mobile phone A may be connected to a wireless headset, and a user may wear the wireless headset (a sound playing device) to listen to an audio (an audio of the "Song A") provided by the desktop computer A that is connected to the mobile phone A and that is used as a sound source. For example, the audio played by the wireless headset is sent by the desktop computer A to the wireless headset by using the mobile phone A. When a connection between the mobile phone A and the desktop computer A is disconnected, for example, another user borrows the mobile phone A and leaves a current room, if the mobile phone A is not in a communication range of the desktop computer A, or the desktop computer A is disconnected from the mobile phone A because a connection is unstable, the wireless headset cannot obtain, by using the mobile phone A, the audio provided by the desktop computer A that is used as the sound source, and therefore cancels playing the audio.

In some embodiments, that the desktop computer A detects that the connection to the mobile phone A is disconnected may also be understood as that the desktop computer A detects that the (directly or indirectly) connected sound playing device (namely, the wireless headset) is disconnected, and may detect at least one device capable of communicating with the desktop computer A, and send request information to the detected device. The device that receives the request information may send linkage data to the desktop computer A based on the request information. For example, the desktop computer A may send request information to the detected mobile phone A, the wireless headset, a smartwatch, a tablet computer, and a smart speaker, and these devices may send linkage data to the desktop computer A based on the received request information.

In some embodiments, the desktop computer A may determine an audio playing manner based on the linkage data. Optionally, the desktop computer A may obtain status data of the desktop computer A, and determine an audio playing manner with reference to the status data and the linkage data. For example, the linkage data may include that the wireless headset currently does not play an audio, that the user wearing the smartwatch is in a sleep state, a location of the tablet computer and that the tablet computer currently does not play an audio in a loudspeaker manner, a location of the smart speaker and that the smart speaker currently does not play an audio. A communication manner between the desktop computer A and each of the wireless headset, the smartwatch, and the smart speaker is a near field communication manner, for example, Bluetooth, NFC, or infrared. Therefore, the desktop computer A may determine that the desktop computer A, the wireless headset, the smartwatch, and the smart speaker are all in same space, and the desktop computer A may determine, based on the location of the smart speaker in the linkage data, that the space is family space. The communication manner between the desktop computer A and the tablet computer may be implemented by using a cloud, Wi-Fi, or the like. The desktop computer A may determine, based on the location of the tablet computer in the linkage data, that the tablet computer is also in the family space. In addition, the desktop computer A may obtain current time "22:30" (belonging to the status data of the desktop computer A). With reference to the status data and the linkage data of the desktop computer A, the desktop computer A may determine, based on a self-learned user habit (it is assumed that, in the family space, when another user sleeps at night, and there is no device for playing an audio in a loudspeaker manner, or there is no smart speaker or the like for playing an audio, the user habitually plays an audio by using the wireless headset), that the audio playing manner is playing by using the wireless headset. Therefore, the desktop computer A may send connection request information to the wireless headset, to establish a connection to the wireless headset. After the connection is established, the desktop computer A indicates the wireless headset to play the audio, and the user may wear the wireless headset to listen to the audio provided by the desktop computer A that is used as the sound source.

This application is not limited to the foregoing examples. In some other examples, when the desktop computer A determines that the wireless headset is in an unconnectable state (for example, no signal of the wireless headset is found, or for another example, the linkage data includes: the wireless headset is playing an audio), and the linkage data further includes information about another wireless headset (for example, the another wireless headset is in a connectable state), the desktop computer A may determine that the audio playing manner is playing by using the another wireless headset.

This application is not limited to the foregoing examples. In some other examples, the linkage data may include that the wireless headset is currently playing an audio (for example, connected to another audio source device). In this case, the desktop computer A may determine that the playing manner (playing by using the wireless headset) used by the user in a current scenario cannot be performed. Therefore, the desktop computer A may determine that the audio playing manner is stopping playing, and display prompt information, and the user selects the audio playing manner. This avoids playing in a loudspeaker manner by mistake.

This application is not limited to the foregoing examples. In some other examples, the linkage data may include that the user wearing the smartwatch is not in a sleep state, and that current time obtained by the desktop computer A is "15:30". With the reference to status data and the linkage data of the desktop computer A, the desktop computer A may determine, based on a self-learned user habit (it is assumed that the user habitually plays an audio by using the smart speaker in family space when no user is sleeping in the afternoon), that the audio playing manner is playing by using the smart speaker. Therefore, the desktop computer A may indicate the smart speaker to play the audio. In some other examples, the desktop computer A may further determine the audio playing manner with reference to a device connection status. For example, there are two smart speakers, one of the smart speakers is connected to the desktop computer A, and the other of the smart speakers is not connected to the desktop computer A. The desktop computer A may determine to play the audio by using the connected smart speaker. This reduces an unnecessary process and improves product usability while ensuring user experience.

It may be understood that, after detecting that the (directly or indirectly) connected sound playing device (namely, the wireless headset) is disconnected, the desktop computer A does not directly play the audio in the loudspeaker manner, but determines the audio playing manner with reference to the status data, the linkage data, and the self-learned user habit of the desktop computer A. In this way, the user habit can be better satisfied, and the user does not need to manually connect the determined sound playing device (for example, the wireless headset) to the desktop computer A. This reduces an unnecessary user operation, avoids playing in the loudspeaker manner by mistake, and improves user experience.

It may be understood that the linkage data is status data of devices capable of communicating with the desktop computer A. In some embodiments, a quantity and types of these devices may be determined by the desktop computer A based on an application scenario, a processing capability of the desktop computer A, and the like. A use scenario is universal. In a full-scenario mode, an advantage of the internet of everything is fully used, an intelligence degree of audio playing is improved, and effectiveness of communication between devices is improved.

The following describes the audio playing method provided in this application.

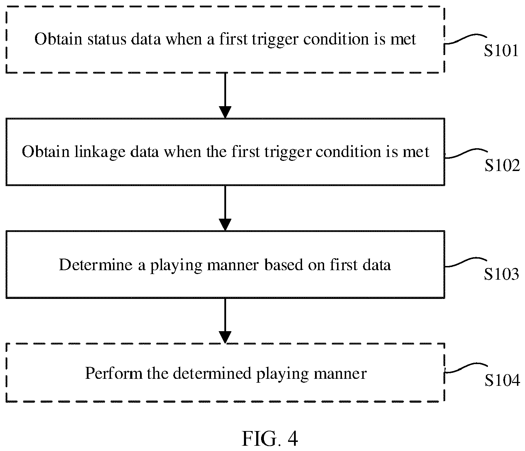

FIG. 4 shows an audio playing method according to an embodiment of this application. The method may be applied to the electronic device 100 shown in FIG. 1. The method may be applied to the electronic device 100 shown in FIG. 2A. The method may be applied to the electronic device 200 shown in FIG. 2B. The method may include but is not limited to the following steps.

S101: A first device obtains status data of the first device when a first trigger condition is met.

In some embodiments, S 101 is optional.

Specifically, the first device may be the primary device in the foregoing embodiments, and the first device and the primary device may be replaced with each other in the following embodiments.

In some embodiments, the first trigger condition may include: The primary device receives a first instruction for playing an audio. Optionally, the first instruction is an instruction for responding to a user operation for playing the audio, and it may be understood as that the first instruction is triggered by the user operation. A type of the user operation includes, for example, but is not limited to, a touch operation performed on a display of the primary device, a voice sent by a user, and a gesture operation, for example, a user operation for answering an incoming call, a user operation for listening to a voice message, and a user operation for playing a song. Optionally, the first instruction is not triggered by a user operation. For example, the first instruction is an instruction for answering an incoming call. In some embodiments, when the primary device receives the first instruction, the primary device is not connected to a sound playing device (for example, a wireless headset, a smart speaker, smart glasses, a smart television, or a smart screen). For example, before receiving the user operation for playing the audio, the primary device does not receive a user operation for connecting to the sound playing device. In the foregoing case, that the first trigger condition is met may be understood as that, when the user does not actively connect the primary device to the sound playing device, the primary device is configured to play an audio for the first time instead of continuing a previous audio playing process. Optionally, the sound playing device is a device that is determined by the primary device based on linkage data and that is configured to play an audio. For example, when the mobile phone B shown in FIG. 3A-1 and FIG. 3A-2 receives a tap operation performed on the playing control 323 in the user interface 320 or a tap operation performed on a control of any song in the song list 322, the mobile phone B may determine that the first trigger condition is met. It may be understood as that the mobile phone B is configured to play an audio for the first time. For details, refer to the descriptions in FIG. 3A-1 and FIG. 3A-2.

In some other embodiments, the first trigger condition may include: The primary device detects that a connection to the sound playing device is disconnected. Optionally, the sound playing device is playing an audio before the connection to the primary device is disconnected, and the audio is an audio provided by the primary device that is used as a sound source. In the foregoing case, that the first trigger condition is met may be understood as that the primary device needs to continue a previous audio play process. For example, the desktop computer A shown in FIG. 3C-1 to FIG. 3C-3 is a primary device, and the wireless headset is a sound playing device. The desktop computer A is connected to the wireless headset by using the mobile phone A, and plays, by using the wireless headset, an audio provided by the desktop computer A that is used as a sound source. In a process in which the wireless headset plays the audio of the "Song A", if the desktop computer A detects that the connection to the mobile phone A is disconnected, and the desktop computer A cannot provide the audio to the wireless headset by using the mobile phone A, the desktop computer A may determine that the first trigger condition is met. It may be understood that the desktop computer A needs to continue to play the audio of the "Song A". For details, refer to the descriptions in FIG. 3C-1 to FIG. 3C-3.

Specifically, the primary device is a sound source device, and may provide the audio for the audio playing process. Optionally, any electronic device that can be used as a sound source may be a primary device. Status data of the primary device is data that can be obtained by the primary device, and optionally includes data detected by the primary device by using a module included in the primary device. A type of the status data of the primary device includes, for example, but is not limited to, at least one of the following: current time, a current location, whether to connect to a network, information about a connectable device (for example, a device that stores a unique identifier, for example, an address, in a database, a device that can find a Bluetooth signal, or the like), information about a connected device (for example, a type of the device and a status of the device), and status information of the user (for example, determined based on a collected physiological parameter of the user), for example, whether the user is in a sleep state or a motion state. For an example in which the primary device obtains the status data of the primary device, refer to the example in the foregoing manner in which the electronic device obtains the status data of the electronic device.

S 102: When the first trigger condition is met, the primary device obtains the linkage data of the primary device.

Specifically, the linkage data of the primary device may include status data of at least one assisting device capable of communicating with the primary device. The assisting device may be the secondary device in the foregoing embodiments. In the following embodiments, the assisting device and the secondary device may be replaced with each other. A primary device and a secondary device are relative concepts. For example, in the communication system shown in FIG. 1, when the electronic device 100 is used as a sound source to provide an audio for playing, the electronic device 100 may be a primary device, and the electronic device 200 capable of communicating with the electronic device 100 may be a secondary device, for example, the wireless headset 201, the smart speaker 202, the smartwatch 203, or the gateway device 204 that is directly connected to the electronic device 100, for another example, the tablet computer 205, the desktop computer 206, the smartphone 207, or the notebook computer 208 that is indirectly connected to the electronic device 100. When the primary device changes, the secondary device corresponding to the primary device also changes. For example, when being used as a sound source to provide an audio for playing, the tablet computer 205 may be a primary device. In this case, the secondary device is an electronic device capable of communicating with the tablet computer 205, for example, the directly connected gateway device 204, or the indirectly connected desktop computer 206 or electronic device 100.

Status data of the secondary device is data of the secondary device that may be obtained by the secondary device, and the status data of the secondary device may include the data of the secondary device, or may include data of a connected device. A type of the status data of the secondary device includes, for example, but is not limited to, at least one of the following: a type of the secondary device, a status of the secondary device, current time, a current location, whether the secondary device is connected to a network, a type of the connected device, a status of the connected device, and status information of the user (for example, determined based on a collected physiological parameter of the user), for example, whether the user is in the sleep state or the motion state. For an example in which the secondary device obtains the status data of the secondary device, refer to the example in the foregoing manner in which the electronic device obtains the status data of the electronic device.

For an example in which the primary device obtains the linkage data of the primary device, refer to the example in the foregoing manner in which the electronic device obtains the linkage data.

In some embodiments, in the linkage data of the primary device (namely, status data of at least one secondary device) obtained by the primary device, a data type of status data of any secondary device may be related to a device type of the secondary device. A specific example is shown in Table 1.

**Table 1 Linkage data of the primary device**

| Device type of the secondary device | Data type of the status data |
|---|---|
| First type | Type (for example, a smartphone, a tablet computer, a desktop computer, or a notebook computer) |
| | Current location |
| | Common audio playing manner in a current scenario |
| | Whether to play an audio and an audio playing manner |
| | Whether there is a sound playing device that can be connected or is connected |
| Second type | Type (for example, a smartphone or a tablet computer) |
| | Whether there is a user in a sleep state |
| Third type | Type (for example, a smartwatch and a smart band) |
| | Whether a wearer is in a sleep state |
| Fourth type (for example, a smart screen, a smart television, and a smart speaker) | Type (for example, the smart screen, the smart television, and the smart speaker) (for example, a sound playing device) |
| | Current location |
| | Whether to play an audio |

A secondary device of the first type is a device that can be used as a sound source, namely, a device that can be used as a primary device. It should be noted that, that the secondary device of the first type can be used as a primary device means that the secondary device of the first type may be used as a primary device in another case, instead of a primary device in the current scenario. At any moment, there is only one primary device but may be a plurality of secondary devices in the communication system in this application. The plurality of secondary devices may include a secondary device that has been used as a primary device before, namely, the secondary device of the first type. The secondary device of the first type may provide, for the primary device, an audio playing manner that is preset by the secondary device and that is commonly used in the current scenario or an audio playing manner that is self-learned by the secondary device and that is commonly used in the current scenario, for example, provide, for the primary device, an audio playing manner that is commonly used at current time, and provide, for the primary device, a current location and an audio playing manner that is commonly used at the current location. The secondary device of the first type may also provide a status of the secondary device to the primary device, for example, whether an audio is being played currently. If the audio is being played currently, the secondary device of the first type may also provide an audio playing manner for the primary device. The secondary device of the first type may also provide information about a connected device for the primary device, for example, whether a connectable or connected sound playing device exists. The connected device is, for example, a device that stores a unique identifier, or a device that can find a Bluetooth signal. Optionally, if the connectable or connected sound playing device exists, connection information (for example, a Bluetooth address and an access password) of the sound playing device may be provided for the primary device.

A secondary device of the second type is a device connected to at least one wearable device. The secondary device of the second type may obtain, from the connected at least one wearable device, a status of at least one user that wears the at least one wearable device, for example, whether the at least one user is in a sleep state or a motion state. In some embodiments, a distance between the secondary device and the connected at least one wearable device may be short, and a distance between the secondary device and the primary device may also be short, for example, the devices are connected in a near field communication manner, for example, Bluetooth, infrared, or NFC. Optionally, the at least one user may be a user that is close to the primary device, instead of a user that uses the primary device. In this application, an audio playing manner may be determined by comprehensively considering a status of another user that is close to a user that uses the primary device. For example, when the user that is close to the user is in a sleep state, the audio is not played in a loudspeaker manner. This avoids an improper playing manner, for example, playing in the loudspeaker manner by mistake, and improves user experience.

A secondary device of the third type may be a wearable device. The secondary device of the third type may provide a status of a user that wears the secondary device, for example, whether the user is in a sleep state or a motion state. In some embodiments, the secondary device may be a device connected to the primary device, for example, connected in a near field communication manner, for example, Bluetooth, infrared, or NFC. Optionally, the user may be a user that uses the primary device. In this application, an audio playing manner may be determined by comprehensively considering a status of the user that uses the primary device. This avoids an improper playing manner, for example, playing in a loudspeaker manner by mistake, and improves user experience.

A secondary device of the fourth type may be a sound playing device that plays an audio by using a speaker. In some embodiments, the secondary device of the fourth type may provide a current location for the primary device. In some other embodiments, the secondary device of the fourth type may also provide a distance between the primary device and the secondary device, or whether the secondary device of the fourth type and the primary device are in a same room, or the like. The secondary device of the fourth type may further provide a status of the secondary device for the primary device, for example, whether an audio is being played currently. In this application, an audio playing manner may be determined by comprehensively considering a case of playing an audio by another device. For example, when a smart speaker that is close to a user that uses the primary device is playing an audio, the audio is not played in a loudspeaker manner, and the playing manner better meets a user requirement. For example, when there is a sound playing device that does not play audio and the sound playing device is a sound playing device commonly used by the user, the sound playing device is configured to play an audio.

In some embodiments, the secondary device is a device connected to the primary device, and the primary device may directly determine a distance between the primary device and the secondary device based on strength of a received signal, and the secondary device does not need to provide the current location. In some embodiments, the secondary device may provide a location of a connected device for the primary device, so that the primary device comprehensively considers and determines an audio playing manner.

In some embodiments, the primary device may send a request message to the secondary device, and the secondary device sends the linkage data to the primary device based on the request message. In some other embodiments, the primary device may send a request message to another device other than the secondary device, and the another device sends the linkage data (namely, the status data of the secondary device) to the primary device based on the request message. For example, when the secondary device logs in to a first account by using a first application, the secondary device may send the status data of the secondary device to an application server that provides a service for the first application in a cloud, and the status data of the secondary device may be stored in the cloud as information about the first account. When logging in to the first account by using the first application, the primary device may request the application server to obtain the information about the first account (namely, the linkage data).

In some embodiments, when determining that the user that uses the primary device is close to or the same as a user that uses the secondary device, the primary device may obtain the status data of the secondary device as the linkage data. For example, when the distance between the primary device and the secondary device is less than or equal to a preset distance threshold or the primary device and the secondary device are in same space, the primary device sends request information to the secondary device to request the linkage data. For another example, the primary device may obtain, by using a logged-in account, the status data of the secondary device that has logged in to the account. For a specific example, refer to the foregoing example in which the primary device may obtain the linkage data from a device other than the secondary device. In this way, it is ensured that the determined audio playing manner is for the current user, is very personalized, and better meets a requirement of the current user.

In some embodiments, when the primary device obtains the linkage data, (a data type of) the required linkage data may be indicated by the sent request message, and a device receiving the request message may determine, based on the request information, the linkage data required by the primary device, and send the linkage data to the primary device. For example, the request message sent by the primary device to the wearable secondary device may include information used to request to obtain a status of a wearer. Optionally, for different secondary devices, data types of linkage data requested by the primary device may be different.

In some other embodiments, a device that provides linkage data may pre-negotiate (a data type of) required linkage data with the primary device. In this way, after receiving a request message subsequently, the device may directly send status data of the secondary device of the pre-negotiated data type to the primary device. The request message may be used only to request the linkage data, and does not need to indicate a specific type of the linkage data. This reduces a data amount of the request message. Optionally, for different secondary devices, data types of linkage data determined by the primary device through negotiation may be different.

In some embodiments, a device that provides linkage data may also determine a data type of sent linkage data with reference to a scenario (for example, a status of a connection to another device, or a type of another connected device).

In some embodiments, after receiving the linkage data, the primary device may perform screening processing on the linkage data, for example, screen out useless data and abnormal data. The useless data is linkage data that is not required by the primary device (which may be understood as extra linkage data). For example, the linkage data sent by the secondary device includes 10 types, but the primary device needs only eight types in the 10 types in the current scenario. The abnormal data is, for example, a garbled character or data that is greatly different from normal data.

In some embodiments, a sequence of S101 and S102 is not limited. S101 may be performed before S 102, or S 102 may be performed before S 101, or S 101 and S102 may be performed simultaneously.

S103: The primary device determines the audio playing manner (a playing manner for short) based on first data.

In some embodiments, the first data includes the status data of the primary device. In some embodiments, the first data includes the linkage data of the primary device. The following embodiment is described by using an example in which the first data includes the status data and the linkage data of the primary device.

In some embodiments, the primary device may determine, based on the status data and the linkage data of the primary device, that the playing manner is a playing manner (which may be referred to as a first manner) in a plurality of manners. The plurality of manners include, for example, but are not limited to, the following manners: playing by using a loudspeaker of the primary device (a loudspeaker manner), playing by using a receiver (an earpiece) of the primary device (an earpiece manner), playing and stopping playing the audio by using a sound playing device A, playing by using another module included in the primary device, and playing by using another sound playing device other than the primary device, for example, playing by using a sound playing device B. Optionally, device types of the sound playing device A and the sound playing device B are different. For example, the sound playing device A is a wireless headset, and the sound playing device B is a smart speaker. Optionally, device types of the sound playing device A and the sound playing device B are the same, for example, both are wireless headsets. The sound playing device is a device other than the primary device and a module that is included in the primary device and that is configured to play an audio. The sound playing device may be any device capable of communicating with the primary device. The device type includes, for example, but is not limited to, the wireless headset, the smart speaker, the smart glasses, the smart television, or the smart screen. In some embodiments, the sound playing device is one of the at least one secondary device. In some other embodiments, the sound playing device is a device connected to any secondary device. In some other embodiments, the sound playing device is a device other than the secondary device.

In some other embodiments, the determined playing manner is stopping playing the audio. For example, when the primary device determines that a playing manner habitually used by the user is playing by using a sound playing device other than the primary device, but the primary device cannot be connected to the sound playing device currently, or the sound playing device capable of communicating with the primary device is playing an audio and cannot play the audio provided by the primary device, the primary device may determine that the playing manner is stopping playing.

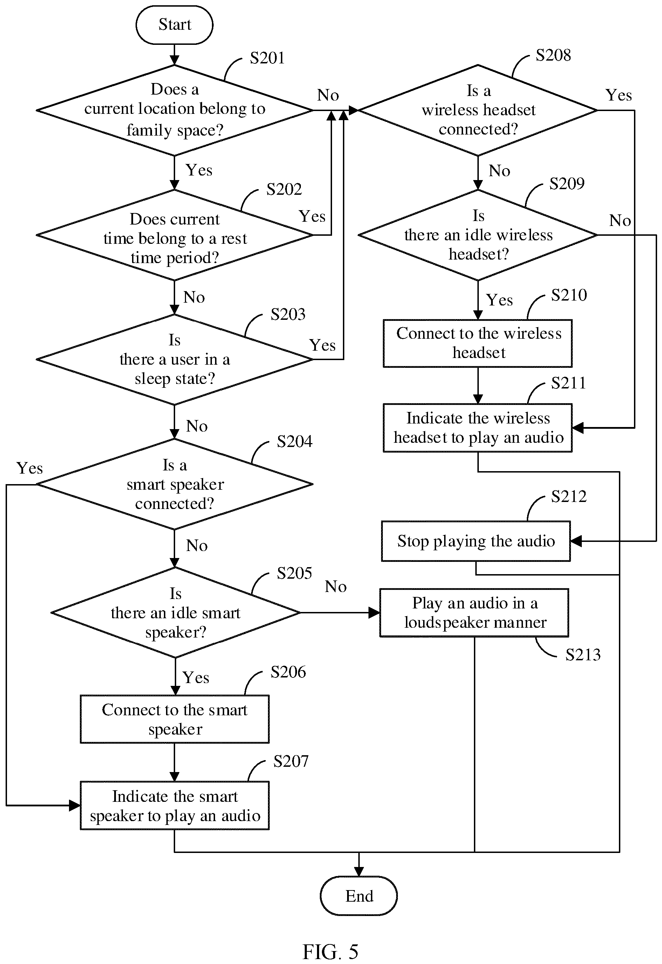

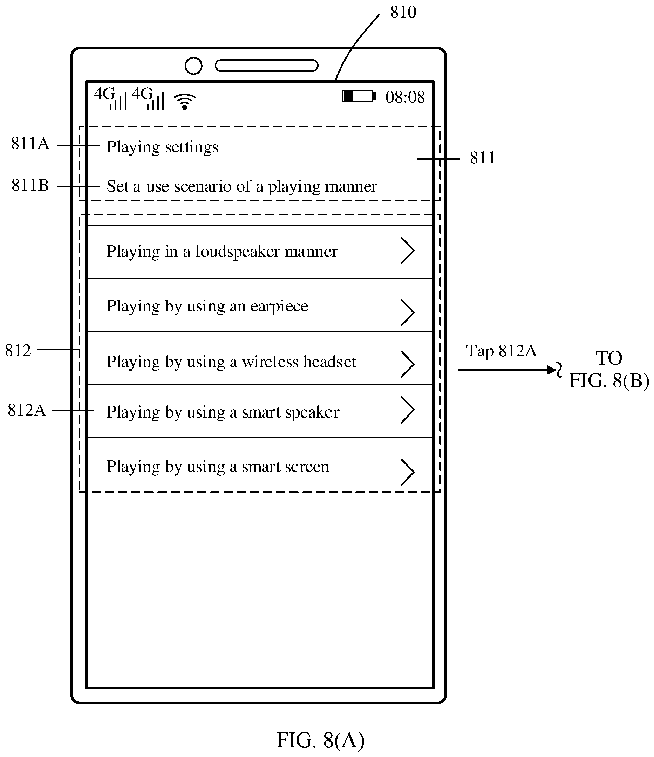

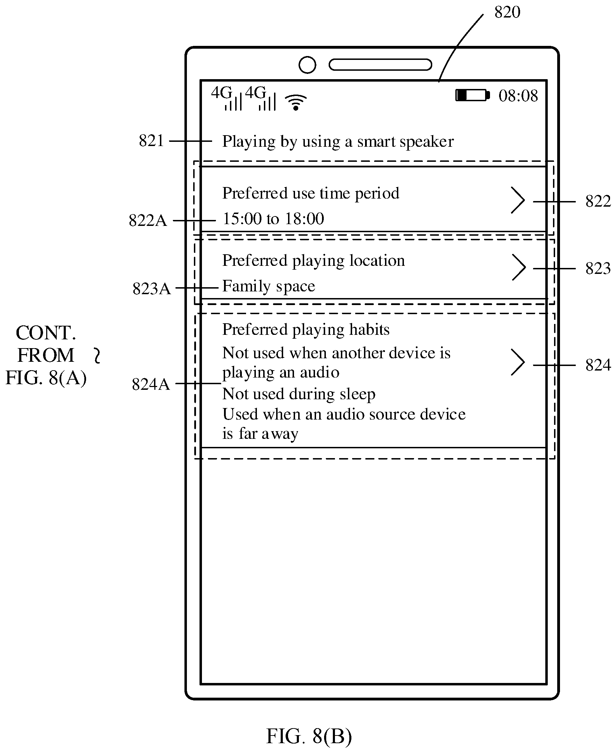

In some embodiments, the primary device may determine the playing manner based on the status data and the linkage data of the primary device according to a preset rule. Optionally, the preset rule may indicate a correspondence between a condition that the first data meets and a playing manner of the first device, for example, may indicate: When the status data and the linkage data of the primary device meet a first condition, the determined playing manner is a first playing manner, and when the status data and the linkage data of the primary device meet a second condition, the determined playing manner is a second playing manner, for example, a logical determining process shown in FIG. 5. Optionally, the preset rule is preset by the primary device, for example, is set by the primary device during factory delivery. Optionally, the primary device may receive a user operation, and determine the preset rule. For a specific example, refer to FIG. 8(A) and FIG. 8(B). Optionally, different users habitually use different playing manners. The primary device may self-learn the playing manner habitually used by the user, and determine the preset rule (including updating the preset rule) based on a self-learned user habit.

For example, when the user uses the primary device (also a sound source device) to play an audio, the primary device may obtain scenario data that can represent the current scenario and a currently used playing manner. The scenario data may include the status data and the linkage data of the primary device. A difference between the scenario data and the status data and the linkage data that are used to determine the playing manner lies in: The primary device obtains the scenario data and the status data and the linkage data that are used to determine the playing manner at different moments. Optionally, the secondary device also obtains the status data of the secondary device (namely, the linkage data of the primary device) at a different moment. In this way, the primary device may obtain scenario data of a plurality of scenarios and corresponding playing manners (which may be understood as learning the playing manner habitually used by the user). The primary device may identify the current scenario based on the status data and the linkage data of the primary device and the stored scenario data of the plurality of scenarios, and determine the playing manner corresponding to the current scenario. Optionally, the preset rule obtained by the primary device through self-learning may be different for different users. When determining the playing manner, the primary device may first identify the current user (for example, identify the user by using a logged-in account, a collected physiological parameter, or another identity authentication manner), and then determine the playing manner by using the preset rule corresponding to the current user. This application is not limited thereto. The preset rule may alternatively be learned by another device. The primary device may determine the preset rule by itself, or may obtain the preset rule from another device. For example, when a user A logs in to a first account by using a cloud, the user A may obtain a preset rule corresponding to the first account from the cloud, and then determine a playing manner by using the preset rule.

In some embodiments, a secondary device for obtaining scenario data may be the same as the secondary device for providing the linkage data. In some other embodiments, the secondary device for obtaining the scenario data may be different from the secondary device for providing the linkage data. For example, secondary devices for obtaining scenario data are more than the secondary device for providing the linkage data.

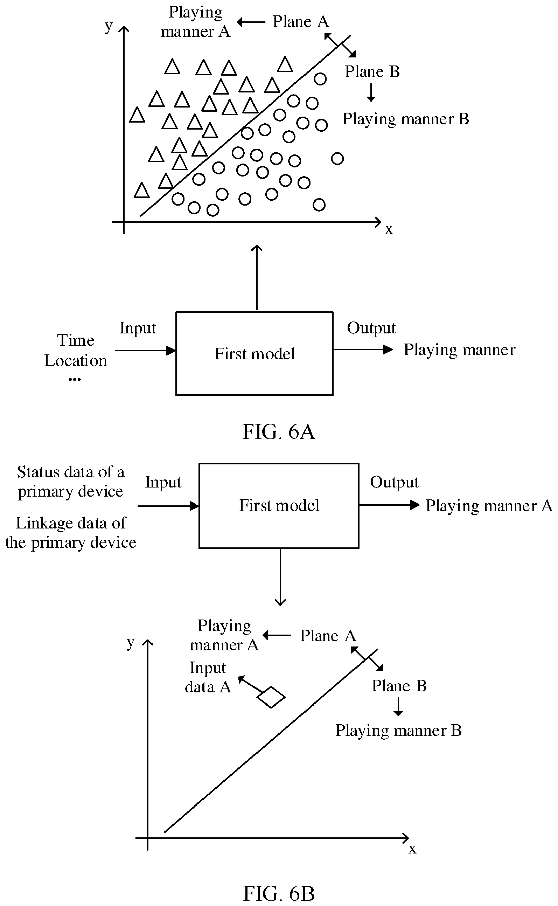

In some other embodiments, the primary device may use a machine model to determine the playing manner based on the status data and the linkage data of the primary device. Optionally, the primary device may use the status data and the linkage data of the primary device as inputs of the machine model, to obtain an output of the machine model: the playing manner. Optionally, the machine model is preset by the primary device, for example, is set by the primary device during factory delivery. Optionally, different users habitually use different playing manners. The primary device may self-learn the playing manner used by the user, and train the machine model (including updating the machine model) based on the self-learned user habit. An example in which the primary device trains the machine model is shown in FIG. 6A, and an example in which the primary device determines the playing manner by using the machine model is shown in FIG. 6B. This application is not limited thereto. The machine model may alternatively be obtained through training by another device. The primary device may obtain the machine model through training by itself, or may obtain the machine model from another device.

In some embodiments, the preset rule or the machine model may further include a setting of a priority, for example, but is not limited to setting the priority based on a device type, a device status, a connection manner (for example, whether the connection manner is preemptive), a distance to the first device, and the like. For example, in the scenario shown in FIG. 3C-1 to FIG. 3C-3, a device originally used to play the audio provided by the desktop computer A is the wireless headset. When a connection between the desktop computer A and the wireless headset is disconnected, the audio playing manner is determined based on a fact that a priority of an audio playing manner of the wireless headset is higher than a priority of an audio playing manner of a device of another device type.

S104: The primary device performs the determined playing manner.

In some embodiments, S 104 is optional.

In some embodiments, when the determined playing manner is playing by using a module, for example, the loudspeaker or the earpiece of the primary device, the primary device may indicate the module, for example, the loudspeaker or the earpiece, to play the audio provided by the primary device.

In some other embodiments, when the determined playing manner is playing by using the sound playing device connected to the primary device, the primary device may send the audio to the sound playing device, so that the sound playing device plays the audio provided by the primary device. Optionally, when the sound playing device is directly connected to the primary device, the primary device may directly send the audio to the sound playing device through a communication line. Optionally, when the sound playing device is indirectly connected to the primary device by using another device, the primary device may send the audio to the sound playing device by using the another device.

In some other embodiments, when the determined playing manner is playing by using a sound playing device that is not connected to the primary device, the primary device may first send connection request information to the sound playing device, and then send the audio to the sound playing device after connecting to the sound playing device, so that the sound playing device plays the audio provided by the primary device. For specific examples, refer to FIG. 3A-1 and FIG. 3A-2, and FIG. 3C-1 to FIG. 3C-3. Optionally, when the primary device fails to connect to the sound playing device, the primary device may stop playing the audio. Optionally, when the primary device stops playing the audio, the primary device may display prompt information to prompt the user that the primary device cannot connect to the sound playing device, so that the user selects a playing manner.

In some other embodiments, when the determined playing manner is stopping playing, the primary device may display prompt information, so that the user selects a playing manner. Optionally, the prompt information may be used to notify the user of a status of a current sound playing device. For example, a sound playing device capable of communicating with the primary device currently is playing an audio and cannot be used to play the audio provided by the primary device, or there is no sound playing device capable of communicating with the primary device currently. For a specific example, refer to the prompt information 331 in FIG. 3B.

In some examples, the first trigger condition includes: The primary device receives the first instruction for playing an audio. When the primary device determines that the first trigger condition is met, the first device may not be connected to the second device, and a device that is most recently connected to the second device is a device other than the first device. The first device may determine, based on the first data (for example, including that a status of the second device is a connectable state), to play the audio by using the second device. When performing the determined playing manner, the first device may establish a connection to the second device, and play the audio by using the second device. For a specific example, refer to FIG. 3A-1 and FIG. 3A-2. The first device is the mobile phone B, the second device is the wireless headset, and a device that is most recently connected to the second device is the mobile phone A.

In some other examples, the first trigger condition includes: The primary device detects that a connection to the sound playing device is disconnected. It is assumed that the first data includes a type of the second device and that a status of the second device is a connectable state, and the type of the second device is the same as a type of the sound playing device. The first device may determine, based on the first data, to play the audio by using the second device. When performing the determined playing manner, the first device may establish a connection to the second device, and play the audio by using the second device. For a specific example, refer to FIG. 3C-1 to FIG. 3C-3. The first device is the desktop computer A, and the second device is the wireless headset.

In some embodiments, after the primary device performs the determined playing manner, when the primary device does not receive, within a preset time period, a user operation used to switch the playing manner, the primary device may learn that the determined playing manner is the playing manner habitually used by the user. For example, the primary device may update the preset rule or the machine model based on the determined playing manner and the status data and the linkage data of the primary device that are used to determine the playing manner.

In some embodiments, after the primary device performs the determined playing manner, when the primary device receives, within a preset time period, a user operation used to switch the playing manner, the primary device may learn that a playing manner after switching is the playing manner habitually used by the user. For example, the primary device may update the preset rule or the machine model based on the playing manner after switching and status data and linkage data of the primary device that are used to determine the playing manner.

This application is not limited to the foregoing examples, the primary device may also determine the playing manner only based on the linkage data.

It may be understood that, the linkage data of the primary device in the foregoing example, optionally, and the status data, may represent a current playing scenario. Different linkage data (optionally, and the status data) may represent different playing scenarios, and determined playing manners may also be different. Therefore, the playing manner determined by using the linkage data (optionally, and the status data) more conforms to the current playing scenario, and the playing manner determined by using the self-learned user habit more conforms to the user habit, so that the audio playing manner is more intelligent.

In the method shown in FIG. 4, the primary device may self-learn, based on linkage with the secondary device, the playing manner habitually used by the user, and intelligently adjust the audio playing manner based on the status data of the primary device and the linkage data of the primary device (the status data of the secondary device). This avoids poor user experience caused by playing in the loudspeaker manner by mistake, and meets a user requirement. The playing manner is determined based on the linkage data. In an all-scenario mode, advantages of internet of everything can be fully utilized to improve effectiveness of communication between devices. Optimization of switching the audio playing manner greatly deepens users' awareness of internet of everything.

In addition, any device capable of communicating with the primary device may be used as a secondary device to determine a playing manner, and a single secondary device or a plurality of secondary devices may be used in a scenario. This broadens a usage scenario.

In some embodiments, the primary device may determine the audio playing manner according to the preset rule. A specific example is shown in FIG. 5.

FIG. 5 is a schematic flowchart of another audio playing method according to an embodiment of this application. The procedure may be applied to the electronic device 100 shown in FIG. 1. The procedure may be applied to the electronic device 100 shown in FIG. 2A. The method may be applied to the electronic device 200 shown in FIG. 2B. The procedure may belong to S103 and S104 shown in FIG. 4.

In FIG. 5, a preset rule (for example, a user habit learned by a primary device) includes: In family space, when there is no user in a sleep state in an entertainment time period, a preferred playing manner is playing by using a smart speaker, and a second-preferred playing manner is playing an audio in a loudspeaker manner; and in outdoor space or in a rest time period, or when there is a user in a sleep state, a preferred playing manner is playing by using a wireless headset, and a second-preferred playing manner is stopping playing.

The procedure may include but is not limited to the following steps.

S201: The primary device determines whether a current location of the primary device belongs to the family space.

Specifically, the primary device may preset a category of a geographical location. For example, a geographical location within a preset range belongs to the family space, and a geographical location outside the preset range belongs to the outdoor space. The primary device obtains status data of the primary device. When the primary device is located at the current location, it may be determined whether the current location belongs to the family space. If the current location belongs to the family space, a next determining step may be performed, that is, S202 is performed. If the current location does not belong to the family space, that "the preferred playing manner in the outdoor space is playing by using the wireless headset" in the preset rule is met. In this case, the primary device may determine whether the preferred playing manner in the preset rule can be performed, and therefore, S208 may be performed.

S202: The primary device determines whether current time belongs to the rest time period.

Specifically, the primary device may preset a time type, for example, 00:00 to 08:00, 13:00 to 14:00, and 22:00 to 00:00 belongs to the rest time period, and the other time period belongs to an entertainment time period. The primary device may be obtained by the primary device by obtaining system time of the primary device, or may be obtained from linkage data. When determining that the current time does not belong to the rest time period, the primary device may continue to perform a next determining step, that is, perform S203. When it is determined that the current time belongs to the rest time period, that "the preferred playing manner in the rest time period is playing by using the wireless headset" in the preset rule is met. In this case, the primary device may determine whether the preferred playing manner in the preset rule can be performed, and therefore, S208 may be performed.

S203: The primary device determines whether there is a user in the sleep state.

Specifically, the primary device may determine, by using the status data of the primary device, whether there is a user in the sleep state, or may determine, by using the linkage data, whether there is a user in the sleep state. In some embodiments, the status data and/or linkage data of the primary device may directly include information representing whether the user is in the sleep state. The primary device may directly learn whether there is a user is in the sleep state. For example, a secondary device is a smartphone connected to a smart band, and the secondary device may determine, based on physiological parameters such as a heart rate and a respiratory rate that are sent by the smart band, whether the user is in the sleep state. A determining result may be used as the linkage data. In some other embodiments, the status data and/or linkage data of the primary device may include information used to determine whether the user is in the sleep state, for example, physiological parameters such as a heart rate and a respiratory rate. The primary device determines, based on the information, whether the user is in the sleep state.

In some embodiments, the information used to determine whether the user is in the sleep state may be obtained by a device that is close to the primary device, and may be understood as that the user is close to the primary device. For example, the information is sent by a device that is connected to the primary device in a near field communication manner. An audio playing manner may be determined by comprehensively considering a status of another user that is close to a user that uses the primary device. For example, when the user that is close to the user is in the sleep state, an audio is not played in a loudspeaker manner. This avoids an improper playing manner, for example, playing in the loudspeaker manner by mistake, and improves user experience.

When the primary device determines that no user is in the sleep state, that "in family space, when there is no user in a sleep state in an entertainment time period, a preferred playing manner is playing by using a smart speaker" in the preset rule is met. In this case, the primary device may determine whether the preferred playing manner in the preset rule can be performed, and therefore, S204 may be performed. When it is determined that there is a user in the sleep state, that "when there is a user in a sleep state, a preferred playing manner is playing by using a wireless headset" in the preset rule is met. In this case, the primary device may determine whether the preferred playing manner in the preset rule can be performed, and therefore S208 may be performed.

S204: The primary device determines whether to connect to the smart speaker.

Specifically, the primary device may determine whether the primary device is directly or indirectly connected to the smart speaker, for example, whether there is a smart speaker in connected devices, or whether there is a device that is in connected devices and that is connected to the smart speaker. When the smart speaker is not connected, S205 may be performed. When the smart speaker is connected, the primary device may determine that the preferred playing manner in the preset rule can be performed. Therefore, the primary device may determine that the playing manner is playing by using the smart speaker, and perform the playing manner, that is, perform S207.

S205: The primary device determines whether there is an idle smart speaker.

Specifically, the primary device may determine whether there is a smart speaker that can be directly or indirectly connected and that is not playing an audio (namely, the idle smart speaker), for example, whether there is a smart speaker in devices that can find a Bluetooth signal. If there is a smart speaker in the devices that can find the Bluetooth signal, the primary device sends information to the smart speaker, to request to determine whether the smart speaker is currently playing an audio. When there is an idle smart speaker, S206 may be performed. When there is no idle smart speaker, the primary device may determine that the preferred playing manner in the preset rule cannot be performed. Therefore, the primary device determines that the playing manner is the secondary-preferred playing manner (playing an audio in the loudspeaker manner) in the preset rule, and performs the playing manner, that is, performs S213.

S206: The primary device connects to the smart speaker.

Specifically, when determining that there is an idle smart speaker, the primary device may send connection request information to the smart speaker, to connect to the smart speaker. When the primary device is successfully connected to the smart speaker, the primary device may determine that the preferred playing manner in the preset rule can be performed. Therefore, the primary device may determine that the playing manner is playing by using the smart speaker, and perform the playing manner, that is, perform S207.

S207: The primary device indicates the smart speaker to play an audio.

Specifically, when the primary device is connected to the smart speaker, the primary device may indicate the smart speaker to play an audio. For example, the primary device sends indication information and audio data to the smart speaker, and the smart speaker plays the audio data in response to the indication information.

In some other embodiments, when the primary device fails to connect to the smart speaker, the primary device may determine that the preferred playing manner in the preset rule cannot be performed. Therefore, the primary device determines that the playing manner is the secondary-preferred playing manner (playing an audio in the loudspeaker manner) in the preset rule, and performs the playing manner, that is, performs S213.

S208: The primary device determines whether the primary device is connected to the wireless headset.

Specifically, the primary device may determine whether the primary device is directly or indirectly connected to the wireless headset, for example, whether there is a wireless headset in connected devices, or whether there is a device that is in connected devices and that is connected to the wireless headset. When the wireless headset is not connected, 5209 may be performed. When the wireless headset is connected, the primary device may determine that the preferred playing manner in the preset rule can be performed. Therefore, the primary device may determine that the playing manner is playing by using the wireless headset, and perform the playing manner, that is, perform S211.

S209: The primary device determines whether there is an idle wireless headset.

Specifically, the primary device may determine whether there is a wireless headset that can be directly or indirectly connected and that is not playing an audio (namely, the idle wireless headset), for example, whether there is a wireless headset in devices that can find a Bluetooth signal. If there is a wireless headset in the devices that can find the Bluetooth signal, the primary device sends information to the wireless headset, to request to determine whether the wireless headset is currently playing an audio. When there is an idle wireless headset, 5210 may be performed. When there is no idle wireless headset, the primary device may determine that the preferred playing manner in the preset rule cannot be performed. Therefore, the primary device determines that the playing manner is the secondary-preferred playing manner (stopping playing) in the preset rule, and performs the playing manner, that is, performs S212.

S210: The primary device connects to the wireless headset.

Specifically, when determining that there is an idle wireless headset, the primary device may send connection request information to the wireless headset, to connect to the smart speaker. When the primary device is successfully connected to the wireless headset, the primary device may determine that the preferred playing manner in the preset rule can be performed. Therefore, the primary device may determine that the playing manner is playing by using the wireless headset, and perform the playing manner, that is, perform S211.

S211: The primary device indicates the wireless headset to play an audio.

Specifically, when connecting to the wireless headset, the primary device may indicate the wireless headset to play an audio. For example, the primary device sends audio data to the wireless headset, and the wireless headset plays the audio data after receiving the audio data.

In some other embodiments, when the primary device fails to connect to the wireless headset, the primary device may determine that the preferred playing manner in the preset rule cannot be performed. Therefore, the primary device determines that the playing manner is the secondary-preferred playing manner (stopping playing) in the preset rule, and performs the playing manner, that is, performs S212.

S212: The primary device stops playing an audio.

Specifically, when determining that the preferred playing manner (playing by using the wireless headset) in the preset rule cannot be performed, the primary device may perform the secondary-preferred playing manner: stopping playing. In some embodiments, when stopping playing the audio, the primary device may display prompt information, so that the user selects a playing manner. For details, refer to the descriptions of stopping playing in S104 in FIG. 4.

S213: The primary device plays the audio in the loudspeaker manner.

Specifically, when determining that the preferred playing manner (playing by using the smart speaker) in the preset rule cannot be performed, the primary device may perform the secondary-preferred playing manner: playing the audio in the loudspeaker manner, that is, playing the audio by using a loudspeaker of the primary device.

The example shown in FIG. 5 is no limitation. In some other examples, S201 to 5203 may be one step. For example, a space label is preset on a device connected to the primary device, and the primary device may obtain data of a device whose space label is the family space, and determine whether a user using the device is in the sleep state. If the user is not in the sleep state, 5204 is performed. If the user is in the sleep state, 5208 is performed. A specific manner in which the primary device determines the audio playing manner according to the preset rule is not limited in this application.

In some embodiments, in a process in which the user uses the primary device daily, the primary device may self-learn an audio playing manner used by the user, to train the machine model. The machine model is used to determine the audio playing manner. For a specific example, refer to FIG. 6A.

As shown in FIG. 6A, when a first user uses a primary device to play an audio in any scenario, the primary device may obtain scenario data of the scenario. For descriptions of the scenario data, refer to the descriptions of the scenario data in S103 in FIG. 4, for example, current time, a current location, whether the primary device is connected to a network, and information about a device connected to the primary device. In addition, the primary device may obtain a playing manner used in the current scenario. The primary device may use scenario data of at least one scenario as an input of a first model, and use a playing manner used in the at least one scenario as an output of the first model, to obtain the first model through training. The first model is used to determine the playing manner when the first user plays an audio. The foregoing process may be understood as that the primary device learns a playing habit of the first user.

The primary device may learn playing habits of the first user in a plurality of scenarios. For example, the primary device may map scenario data of the plurality of scenarios to a two-dimensional plane shown in FIG. 6A. The two-dimensional plane may correspond to the first model, and any point may represent scenario data of one scenario. The scenario data of the plurality of scenarios may include scenario data corresponding to a playing manner A and scenario data corresponding to a playing manner B. In FIG. 6A, scenario data corresponding to different playing manners is distinguished by using shapes of points, a triangular point represents the scenario data corresponding to the playing manner A, and a circular point represents the scenario data corresponding to the playing manner B. The primary device may divide the two-dimensional plane into two-dimensional planes corresponding to different playing manners. As shown in FIG. 6A, the two-dimensional plane is divided into a two-dimensional plane A corresponding to the playing manner A and a two-dimensional plane B corresponding to the playing manner B, to ensure that the two-dimensional plane A includes, as much as possible, points (namely, triangle points) representing scenario data corresponding to the playing manner A, and the two-dimensional plane B includes, as much as possible, points (namely, circle points) representing scenario data corresponding to the playing manner B, for example, more than 80% of the triangular points are in the two-dimensional plane A, and more than 80% of the circular points are in the two-dimensional plane B. When the first model obtained through training in this way is used, if a point of input data of the first model falls into the two-dimensional plane A, the output of the first model is the playing manner A corresponding to the two-dimensional plane A. If a point of input data of the first model falls into the two-dimensional plane B, the output of the first model is the playing manner B corresponding to the two-dimensional plane B. A specific example is shown in FIG. 6B.

In some embodiments, the primary device may use a machine model to determine a playing manner based on status data and linkage data of the primary device. For a specific example, refer to FIG. 6B. FIG. 6B is described by using an example in which the used machine model is the first model determined in FIG. 6A.

As shown in FIG. 6B, the primary device may use the status data and the linkage data of the primary device as an input of the first model, to obtain an output of the first model, namely, the playing manner. For example, the primary device may map the status data and the linkage data (referred to as input data A for short) of the primary device to a point in a two-dimensional plane shown in FIG. 6B, namely, a diamond-shaped point shown in FIG. 6B. The primary device may determine that the point is located in a two-dimensional plane A, and the playing manner (the playing manner A) corresponding to the two-dimensional plane A is the output of the first model.

It may be understood that FIG. 6A and FIG. 6B are described by using an example in which there are two playing manners. In practice, there may be more playing manners. For example, the machine model for determining the playing manner may use a multi-label classification algorithm, for example, a ranking support vector machine (Rank-SVM) algorithm.

In some other embodiments, a plane corresponding to the machine model and the playing manner may be a one-dimensional plane, a three-dimensional plane, or a super flat plane with a dimension greater than three, not limited to the two-dimensional plane in the foregoing example.

In some embodiments, after obtaining the status data or the linkage data of the primary device, the primary device may first perform conversion processing on the data, for example, convert irregular data into regular data. The regular data is, for example, data whose result includes only yes and no, for example, whether a network is connected, or whether a connected device is a sound playing device. The irregular data is, for example, data whose result includes a specific range, for example, current time or a current location. For example, the primary device may mark a geographical location in a first range as a label 1, mark a geographical location in a second range as a label 2, and mark a geographical location in a third range as a label 3. The primary device may mark time periods from 00:00 to 08:00, 13:00 to 14:00, and 22:00 to 00:00 as a label 00, and mark other time periods as a label 01. In this way, effectiveness of processing by the machine model can be effectively improved, and another factor that affects the intelligent adjustment of the playing manner can be excluded.

In some embodiments, the primary device may self-learn a preprocessing manner in a process in which a user uses the primary device daily. For example, the primary device may gradually accurately determine, based on status data and/or linkage data of the primary device, a first range in which family space is located.

It may be understood that scenario data, and the status data and the linkage data of the primary device may all include data closely related to the user (for example, whether the user is in a sleep state, a physiological parameter, and a logged-in account), and different users may be distinguished by using the data. In addition, the first model is a model corresponding to a first user, and different users may correspond to different machine models. Similarly, different users may correspond to different preset rules. Therefore, this application may provide an intelligent and personalized audio playing service for a user.

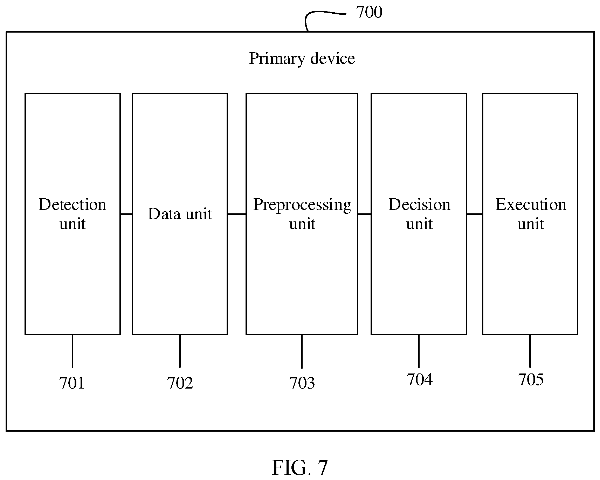

In some embodiments, a structure of the primary device may also be shown in FIG. 7.

FIG. 7 is a schematic diagram of a structure of a primary device according to an embodiment of this application.

As shown in FIG. 7, a primary device 700 may include a detection unit 701, a data unit 702, a preprocessing unit 703, a decision unit 704, and an execution unit 705.

The detection unit 701 is configured to determine whether a first trigger condition is met. For details, refer to the descriptions of determining whether the first trigger condition is met in S104 in FIG. 4.

The data unit 702 is configured to obtain linkage data of the primary device 700. For details, refer to the descriptions of obtaining the linkage data of the primary device in S 102 in FIG. 4. In some embodiments, the data unit 702 is further configured to obtain status data of the primary device 700. For details, refer to the descriptions of obtaining the status data of the primary device in S101 in FIG. 4.

The preprocessing unit 703 is configured to preprocess the obtained status data and/or the linkage data of the primary device 700, and then send preprocessed data to the decision unit 704 for processing. In some embodiments, the preprocessing unit 703 is configured to perform screening processing on the linkage data of the primary device 700, for example, screen out useless data and abnormal data. The useless data is linkage data that is not required by the primary device (which may be understood as extra linkage data), and the abnormal data is, for example, a garbled character or data that is greatly different from normal data. In some embodiments, the preprocessing unit 703 is configured to perform conversion processing on the status data and/or the linkage data of the primary device 700. For a specific example, refer to the descriptions of converting the irregular data into the regular data in FIG. 6A to FIG. 6B.

In some embodiments, the preprocessing unit 703 is further configured to train a machine model. For a specific example, refer to FIG. 6A.

The decision unit 704 is configured to determine a playing manner based on the status data and the linkage data of the primary device 700. For details, refer to the descriptions of S103 in FIG. 4.

The execution unit 705 is configured to perform the determined playing manner. For details, refer to the descriptions of S104 in FIG. 4.

In some embodiments, the electronic device 100 shown in FIG. 2A may be the primary device 700 shown in FIG. 7. The processor 110 shown in FIG. 2A may include the units shown in FIG. 7. The mobile communication module 150, the wireless communication module 160, and the sensor module 180 may include the detection unit 701 and the data unit 702. The audio module 170 may include the execution unit 705.

In some embodiments, the primary device may further receive a user operation, and determine, in response to the user operation, a preset rule used to determine the playing manner. A specific example is shown in FIG. 8(A) and FIG. 8(B).

FIG. 8(A) and FIG. 8(B) are an example schematic diagram of an embodiment of a user interface. An example in which a smartphone shown in FIG. 8(A) and FIG. 8(B) is a primary device is used for description. FIG. 8(A) shows a user interface 810 displayed before 812A is tapped, and FIG. 8(B) shows a user interface 820 displayed after 812A is tapped.

As shown in FIG. 8(A), the primary device may display the user interface 810. The user interface 810 may include a title 811 and a setting list 812. The title 811 may include a theme 811A and a title description 811B. The theme 811A may include a text: "Playing settings", and the title description 811B may include a text: "Set a use scenario of a playing manner", which represents that the user interface 810 is a user interface used to set a preferred use scenario of a playing manner. The setting list 812 may include a plurality of playing manners, for example, playing in a loudspeaker manner, playing by using an earpiece, playing by using a wireless headset, playing by using a smart speaker 812A, and playing by using a smart screen. The primary device may receive a touch operation (for example, a tap operation) performed on a control corresponding to any playing manner in the setting list 812, and display, in response to the touch operation, a user interface for setting a use scenario of the playing manner. For example, the primary device displays the user interface 820 shown in FIG. 8(B) in response to an operation of tapping the smart speaker 812A.

As shown in FIG. 8(B), the primary device may display the user interface 820. The user interface 820 may include a title 821 and a setting list of a use scenario. The title 821 may include a text: "Playing by using a smart speaker", which represents that the user interface 820 is a user interface used to set a preferred use scenario of playing by using the smart speaker. The use scenario setting list includes, for example, a use time setting bar 822, a use location setting bar 823, and a use habit setting bar 824.

The use time setting bar 822 may be used to specify a time period in which the user prefers to play an audio by using the smart speaker, and a specified value 822A represents that a currently set use time period is from 15:00 to 18:00.

The use location setting bar 823 may be used to specify a location at which the user prefers to play an audio by using the smart speaker, and a specified value 823A represents that a currently set playing location is family space.

The use habit setting bar 824 may be used to set another habit that the user prefers to play an audio by using the smart speaker, and a setting value 824A, for example, includes: The smart speaker is not used to play an audio when another device other than the primary device plays an audio, the smart speaker is not used to play an audio when there is a user in a sleep state, and the smart speaker is used to play an audio when the user is far away from an audio source device (the primary device).

In addition to the example shown in FIG. 8(A) and FIG. 8(B), the user may also set a habitual playing manner when an audio is played. Data of a use scenario that can be set by the user may be more or less. A specific manner of setting by the user is not limited in this application.

In this application, the primary device may determine a playing manner by using preset content, for example, determine a playing manner according to a built-in preset rule during factory delivery, or may self-learn a playing habit of the user, or may set a playing habit by the user. The manner is flexible, use scenarios are extensive, and product usability is high.

It should be noted that in this application, when playing an audio, the electronic device may not display an image corresponding to the audio, for example, in a case of answering an incoming call or playing a song, or may display an image corresponding to the audio, where this case may be understood as playing a video.

It may be understood that, when the primary device does not obtain the status data of the primary device, the primary device may determine the playing manner based on the linkage data, and does not determine the playing manner based on the status data of the primary device. Therefore, "the status data and the linkage data of the primary device" used to determine the playing manner may be replaced with "the linkage data of the primary device".

It should be noted that, in embodiments of this application, "at least one" means one or more, and "a plurality of" means two or more. Unless otherwise defined, all technical and scientific terms used in this specification have same meanings as those usually understood by a person skilled in the art of this application. Terms used in the specification of this application are merely for the purpose of describing specific embodiments, but are not intended to limit this application. It should be understood that, unless otherwise stated in this application, "/" means or. For example, A/B may represent A or B. In this application, the term "and/or" describes only an association relationship for describing associated objects and represents that three relationships may exist. It should be noted that, in embodiments of this application, terms such as "first" and "second" are merely used for the purpose of distinction in description, and cannot be understood as indicating or implying relative importance, or as indicating or implying a sequence. A feature limited by "first" or "second" may explicitly or implicitly include one or more features. In the descriptions of embodiments of this application, the word like "exemplary" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a related concept in a specific manner.

A person of ordinary skill in the art may understand that all or some of the procedures of the methods in the foregoing embodiments may be implemented by a computer program instructing related hardware. The computer program may be stored in a computer-readable storage medium. When the computer program is run, the procedures in the foregoing method embodiments are performed. The storage medium includes any medium that can store computer program code, like a read-only memory (read-only memory, ROM), a random access memory (random access memory, RAM), a magnetic disk, or an optical disc.

## Claims

1. An audio playing method, applied to a first device, wherein the first device is configured to provide an audio for playing, and the method comprises:
obtaining first data when a first trigger condition is met, wherein the first trigger condition comprises: a first instruction for playing the audio is received, or a connection to a device configured to play the audio is disconnected, and the first data comprises data obtained by at least one assisting device capable of communicating with the first device; and
determining, based on the first data, that an audio playing manner of the first device is a first manner in a plurality of manners, wherein the plurality of manners comprise the following: playing the audio by using a loudspeaker of the first device, playing the audio by using a second device, and stopping playing the audio.

2. The method according to claim 1, wherein the second device is a device in the at least one assisting device, or the second device is a device connected to the at least one assisting device.

3. The method according to claim 1 or 2, wherein the first data comprises at least one of the following: a type of the assisting device, a status of the assisting device, a type of the device connected to the assisting device, and a status of the device connected to the assisting device.

4. The method according to any one of claims 1 to 3, wherein the first data comprises a status of a user, and the status of the user comprises whether the user is in a sleep state or a motion state.

5. The method according to claim 4, wherein the second device is a wireless headset, and the first data comprises: when the user is in the sleep state or the motion state, the first manner is playing the audio by using the second device.

6. The method according to any one of claims 1 to 5, wherein the first data comprises current time and/or a location of the first device.

7. The method according to claim 6, wherein
when the second device is a smart speaker, the current time belongs to a preset leisure time period, and the location of the first device belongs to preset family space, the first manner is playing the audio by using the second device; or
when the second device is a wireless headset, the current time belongs to a preset rest period, and the location of the first device belongs to preset family space, the first manner is playing the audio by using the second device; or
when the second device is a wireless headset, and the location of the first device belongs to preset outdoor space, the first manner is playing the audio by using the second device.

8. The method according to any one of claims 1 to 7, wherein the first trigger condition comprises: the first instruction is received; when the first trigger condition is met, the first device is not connected to the second device, and a device most recently connected to the second device is a device other than the first device; the first data comprises a status of the second device, the status of the second device is a connectable state, and the first manner is playing the audio by using the second device; and after the determining that an audio playing manner of the first device is a first manner in a plurality of manners, the method further comprises:
establishing a connection to the second device, and playing the audio by using the second device.

9. The method according to any one of claims 1 to 7, wherein the first trigger condition comprises: the connection to the device configured to play the audio is disconnected; the first data comprises a type of the second device and a status of the second device, the type of the second device is the same as a type of the device configured to play the audio, the status of the second device is a connectable state, and the first manner is playing the audio by using the second device; and after the determining that an audio playing manner of the first device is a first manner in a plurality of manners, the method further comprises:
establishing a connection to the second device, and playing the audio by using the second device.

10. The method according to any one of claims 1 to 9, wherein the obtaining first data comprises:
sending a request message to a third device, and receiving second data sent by the third device based on the request message, wherein the first data comprises the second data, and the third device is a device in the at least one assisting device, or the third device is a device that receives the second data sent by the assisting device.

11. The method according to claim 10, wherein the request message comprises information indicating a data type of the second data; or
before the obtaining first data, the method further comprises: determining, by the first device and the third device, a type of the second data through negotiation.

12. The method according to any one of claims 1 to 11, wherein the obtaining first data comprises:
receiving third data sent by a fourth device in the at least one assisting device, and receiving fourth data sent by a fifth device in the at least one assisting device, wherein the first data comprises the third data and the fourth data, a type of the fourth device and a type of the fifth device are different, and a type of the third data and a type of the fourth data are different.

13. The method according to any one of claims 1 to 12, wherein the determining, based on the first data, that an audio playing manner of the first device is a first manner in a plurality of manners comprises: determining, according to a first preset rule, that the audio playing manner of the first device is the first manner in the plurality of manners when the first data meets a first condition, wherein the first preset rule indicates a correspondence between a condition that the first data meets and the audio playing manner of the first device; or
the determining, based on the first data, that an audio playing manner of the first device is a first manner in a plurality of manners comprises: using the first data as an input of a first model, to obtain an output of the first model, wherein the output of the first model is the first manner.

14. The method according to claim 13, wherein before the obtaining first data when a first trigger condition is met, the method further comprises:
when a first user plays the audio by using the first device, obtaining fifth data and a second manner of playing the audio by the first device, wherein the fifth data comprises the data obtained by the at least one assisting device; and
determining, based on the fifth data and the second manner, the first preset rule corresponding to the first user, or using the fifth data as the input of the first model, and using the second manner as the output of the first model, to train the first model corresponding to the first user.

15. The method according to claim 13 or 14, wherein after the determining that an audio playing manner of the first device is a first manner in a plurality of manners, the method further comprises:
performing the first manner;
receiving a second user operation for switching the audio playing manner of the first device;
in response to the second user operation, switching the audio playing manner of the first device from the first manner to a third manner; and
updating the first preset rule based on the first data and the third manner, or updating the first model based on the first data and the third manner.

16. The method according to any one of claims 1 to 15, wherein the assisting device is a device that logs in to a same account as the first device.

17. The method according to any one of claims 1 to 16, wherein the first manner is stopping playing the audio, and after the determining that an audio playing manner of the first device is a first manner in a plurality of manners, the method further comprises:
displaying prompt information when stopping playing the audio provided by the first device, wherein the prompt information is used to prompt the user that the first device has no device available for playing the audio.

18. An audio playing method, applied to an assisting device, wherein the method comprises:
receiving a request message sent by a first device when a first trigger condition is met, wherein the first trigger condition comprises: a first instruction for playing an audio is received, or a connection to a device configured to play an audio is disconnected; and
sending first data to the first device based on the request message, wherein the first data is used by the first device to determine that an audio playing manner is a first manner in a plurality of manners, and the plurality of manners comprise the following: playing the audio by using a loudspeaker of the first device, playing the audio by using a second device, and stopping playing the audio.

19. The method according to claim 18, wherein the second device is a device in at least one assisting device, or the second device is a device connected to at least one assisting device.

20. The method according to claim 18 or 19, wherein the first data comprises at least one of the following: a type of the assisting device, a status of the assisting device, a type of a device connected to the assisting device, and a status of the device connected to the assisting device.

21. The method according to any one of claims 18 to 20, wherein before the receiving a request message sent by a first device when a first trigger condition is met, the method further comprises:
determining a first type by negotiating with the first device; and
the sending first data to the first device based on the request message comprises:
sending, based on the request message, the first data whose data type is the first type to the first device.

22. The method according to any one of claims 18 to 20, wherein the request information comprises information indicating a second type; and the sending first data to the first device based on the request message comprises:
sending, based on the request message, the first data whose type is the second type to the first device.

23. A communication system, comprising a first device and at least one assisting device, wherein the first device is configured to provide an audio for playing, and the at least one assisting device is a device capable of communicating with the first device;
the first device is configured to obtain first data when a first trigger condition is met, wherein the first trigger condition comprises: a first instruction for playing the audio is received, or a connection to a device configured to play the audio is disconnected, and the first data comprises data obtained by the at least one assisting device; and
the first device is configured to determine, based on the first data, that an audio playing manner of the first device is a first manner in a plurality of manners, wherein the plurality of manners comprise the following: playing the audio by using a loudspeaker of the first device, playing the audio by using a second device, and stopping playing the audio.

24. The communication system according to claim 23, wherein the second device is a device in the at least one assisting device, or the second device is a device connected to the at least one assisting device.

25. The communication system according to claim 23 or 24, wherein the first data comprises at least one of the following: a type of the assisting device, a status of the assisting device, a type of the device connected to the assisting device, and a status of the device connected to the assisting device.

26. The communication system according to any one of claims 23 to 25, wherein the obtaining first data comprises:
sending a request message to a third device, and receiving second data sent by the third device based on the request message, wherein the first data comprises the second data, and the third device is a device in the at least one assisting device, or the third device is a device that receives the second data sent by the assisting device.

27. The communication system according to claim 26, wherein the request message comprises information indicating a data type of the second data; or
the first device is further configured to: before obtaining the first data, determine a data type of the second data by negotiating with the third device.

28. The communication system according to any one of claims 23 to 27, wherein the obtaining first data comprises:
receiving third data sent by a fourth device in the at least one assisting device, and receiving fourth data sent by a fifth device in the at least one assisting device, wherein the first data comprises the third data and the fourth data, a type of the fourth device and a type of the fifth device are different, and a type of the third data and a type of the fourth data are different.

29. An electronic device, comprising a transceiver, a processor, and a memory, wherein the memory is configured to store a computer program, and the processor invokes the computer program, to perform the method according to any one of claims 1 to 22.

30. A computer storage medium, wherein the computer storage medium stores a computer program, and when the computer program is executed by a processor, the method according to any one of claims 1 to 22 is implemented.
